(19) Europäisches Patentamt / European Patent Office / Office européen des brevets

(11) **EP 2 860 656 B1**

(12) **FASCICULE DE BREVET EUROPEEN**

(45) Date de publication et mention de la délivrance du brevet:
**27.04.2016 Bulletin 2016/17**

(51) Int Cl.:
*G06F 12/14* (2006.01)    *G06F 9/30* (2006.01)
*G06F 21/60* (2013.01)    *G06F 21/55* (2013.01)

(21) Numéro de dépôt: **14186987.5**

(22) Date de dépôt: **30.09.2014**

(54) **Procédé d'exécution par un microprocesseur d'un code binaire polymorphique d'une fonction prédéterminée**

Verfahren zur Ausführung eines polymorphen Binärcodes einer vorbestimmten Funktion durch einen Mikroprozessor

Method for execution by a microprocessor of a polymorphic binary code of a predetermined function

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2013 FR 1359473**

(43) Date de publication de la demande:
**15.04.2015 Bulletin 2015/16**

(73) Titulaire: **Commissariat à l'Énergie Atomique et aux Énergies Alternatives 75015 Paris (FR)**

(72) Inventeur: **Courousse, Damien 38100 GRENOBLE (FR)**

(74) Mandataire: **GIE Innovation Competence Group 310, avenue Berthelot 69372 Lyon Cedex 08 (FR)**

(56) Documents cités:
**EP-A1- 2 343 663**

• **GIOVANNI AGOSTA ET AL: "A code morphing methodology to automate power analysis countermeasures", DESIGN AUTOMATION CONFERENCE (DAC), 2012 49TH ACM/EDAC/IEEE, IEEE, 3 juin 2012 (2012-06-03), pages 77-82, XP032204572, ISBN: 978-1-4503-1199-1**
• **CHRISTOPH HERBST ET AL: "An AES Smart Card Implementation Resistant to Power Analysis Attacks", 1 janvier 2006 (2006-01-01), APPLIED CRYPTOGRAPHY AND NETWORK SECURITY LECTURE NOTES IN COMPUTER SCIENCE;;LNCS, SPRINGER, BERLIN, DE, PAGE(S) 239 - 252, XP019034418, ISBN: 978-3-540-34703-3 * le document en entier ***
• **Antoine Amarilli ET AL: "Can Code Polymorphism Limit Information Leakage?" In: "Field Programmable Logic and Application", 1 janvier 2011 (2011-01-01), Springer Berlin Heidelberg, Berlin, Heidelberg, XP055138447, ISSN: 0302-9743 ISBN: 978-3-54-045234-8 vol. 6633, pages 1-21, DOI: 10.1007/978-3-642-21040-2_1, * le document en entier ***

EP 2 860 656 B1

**Description**

L'invention concerne un procédé d'exécution par un microprocesseur d'un code binaire polymorphique d'une fonction prédéterminée. L'invention concerne également un tel code binaire polymorphique et un support d'enregistrement d'informations contenant ce code. L'invention concerne enfin l'exécution d'une primitive cryptographique dont une fonction prédéfinie est exécutée suivant ce procédé d'exécution et un procédé de construction de ce code polymorphique.

On connaît des attaques cryptologiques, telles que les attaques par canal auxiliaire (« side channel attacks » en langue anglaise), qui permettent de compromettre la sécurité d'un système informatique à partir de la mesure d'une signature physique de ce système lors de son fonctionnement. Cette signature physique peut comporter un ou plusieurs caractéristiques physiques du système telles que des rayonnements électromagnétiques émis, des délais entre l'exécution de deux instructions ou encore des puissances électriques consommées par le système. Par exemple, les attaques par analyse de puissance (telles que celles connues sous les termes « simple power analysis », « differential power analysis », « correlation power analysis » en langue anglaise) permettent de déterminer le comportement d'un programme informatique exécuté par un processeur en mesurant la puissance électrique consommée par ce processeur lors de l'exécution de ces instructions.

De telles attaques sont par exemple utilisées pour obtenir de façon non autorisée des clés de chiffrement lors du fonctionnement d'un système cryptographique. Aussi, il est souhaitable de pouvoir se prémunir contre de telles attaques. Il existe des procédés pour exécuter un programme informatique de façon à en réduire la vulnérabilité à de telles attaques. Des procédés comportent par exemple l'exécution, par un microprocesseur, d'un code binaire polymorphique d'une fonction prédéterminée.

Un code binaire polymorphique est un code binaire qui change de forme lorsqu'il est exécuté par un microprocesseur, par exemple à chaque exécution. Par « change de forme », on désigne le fait que les instructions exécutées par le microprocesseur sont différentes même si les données d'entrée et de sortie traitées par le code binaire n'ont pas été modifiées d'une exécution à l'autre. Les instructions sont différentes si après le même nombre de cycles du microprocesseur, l'opcode, ou le ou les opérandes ou encore les valeurs littérales de l'instruction exécutée ne sont pas les mêmes.

Un tel procédé est décrit dans l'article de Giovanni Agosta et al., « A code morphing methodology to automate power analysis countermeasures », Proceedings of the 49th Annual ACM/IEEE Design Automation Conférence (DAC'12), pages 77-82, Juin 2012.

Ce procédé présente cependant des inconvénients. En particulier, sa mise en oeuvre nécessite des ressources informatiques importantes (en terme de cycles de calcul ou de besoins en mémoire), pour les raisons qui seront exposées ci-après, ainsi qu'un compilateur statique ad hoc. Ce procédé peut donc difficilement être mis en oeuvre dans des systèmes présentant des ressources limitées, tels que les systèmes embarqués ou les cartes à puce, et demande en outre l'utilisation d'un compilateur spécialisé, ce qui dans la pratique est coûteux si de nombreuses architectures de processeurs doivent être supportées.

Ce procédé comporte un compilateur statique spécialisé. Ce compilateur fonctionne de la même manière qu'un compilateur traditionnel, mais a été modifié pour extraire du code source des « fragments » identifiés dans le code source par des attributs spécifiques (« pragmas »).

Les fragments sont les parties du code binaire destinées à être traitées par le moteur polymorphique décrit ci-après. Les fragments expriment la réalisation d'une fonction du code source en une ou plusieurs instructions machines exprimées de manière normalisée par le compilateur statique. La normalisation consiste à remplacer les opérandes des instructions (comme des identifiants de registre ou des valeurs littérales) par des constantes symboliques.

Le procédé comporte un moteur polymorphique (« polymorphic engine » en anglais) destiné à être exécuté lors de l'exécution de l'application compilée (« runtime » en langue anglaise) par le processeur cible. Lorsqu'il est exécuté, le moteur polymorphique sélectionne, pour chaque fragment, la ou les instructions cibles destinées à être exécutées par ce microprocesseur pour réaliser la fonction prédéterminée. Ces instructions cibles sont sélectionnées en choisissant une variante de codage d'instructions préexistantes contenues dans un dictionnaire d'équivalences embarqué dans le code binaire. Le moteur polymorphique et le dictionnaire d'équivalences sont construits lors de la phase de compilation statique, avant l'exécution du code binaire, à l'aide du compilateur ad hoc décrit ci-dessus.

Le moteur polymorphique fonctionne en appliquant les étapes suivantes pour traiter chaque fragment afin de réaliser un ensemble spécifique d'instructions cibles pour réaliser la fonction prédéterminée :

- la recherche et la sélection, dans un dictionnaire d'équivalences construit lors de la phase de compilation statique, d'un ensemble d'instructions sémantiquement équivalent à cette instruction normalisée ;
- la dénormalisation de l'ensemble d'instructions sélectionné, en remplaçant les constantes symboliques par des valeurs immédiates ;
- l'évaluation des valeurs littérales contenues dans les opérandes.

Le mécanisme de fonctionnement de ce moteur polymorphique est décrit plus en détail dans la section 3.1 de l'article de Agosta et al. précédemment cité.

A titre d'exemple, le fonctionnement de ce moteur polymorphique va être illustré à l'aide du fragment « AND R0, R1, #0 » (représentée ici en langage machine, ou assembleur et qui réalise un « et logique » entre la valeur contenue dans le registre « R1 » et une valeur immédiate « 0 » et stocke le résultat dans le registre « R0 »). Le moteur polymorphique acquiert cette instruction puis effectue les opérations suivantes pour sélectionner une variante de cette instruction :

- lors de l'étape de recherche, le générateur générique recherche dans le dictionnaire d'équivalences les différents blocs d'instructions équivalents à l'opération « AND » en utilisant comme clé de recherche le nom de l'opération « AND », ces blocs étant composés de une ou plusieurs instructions exprimées en langage machine. Ensuite, il sélectionne de façon aléatoire l'un de ces blocs d'instructions équivalents. Lors de la sélection aléatoire parmi les différents blocs d'instructions équivalents, on suppose ici que l'ensemble d'instructions suivantes, sémantiquement équivalent à l'instruction « AND R0, R1, #0 », est sélectionné dans le dictionnaire d'équivalence parmi d'autres blocs sémantiquement équivalentes :

  AND R0, R1, (#0 xor const1)
  AND R2, R1, (#0 xor const2)
  AND R0, R0, R2
  où « R2 » est un registre intermédiaire préalablement vidé, « const1 » et « const2 » deux constantes symboliques additionnelles telles que la valeur de « const2 » soit l'opposé logique de la valeur de « const1 » ;

- lors de l'étape de dénormalisation, des valeurs immédiates sont affectées aux constantes symboliques et aux registres qui avaient été remplacés lors de l'étape de normalisation.

Ainsi, le moteur polymorphique permet de générer aléatoirement des variantes pour les fragments identifiés par le programmeur, et extraits par le compilateur statique. Les instructions associées à chaque variante par le moteur polymorphique peuvent être exécutées par le microprocesseur sans modifier la fonction du programme.

Les équivalences sémantiques, ou variantes, sont stockées dans un dictionnaire d'équivalences défini lors de la compilation du code binaire. Cette compilation est réalisée à partir d'un code source d'un programme informatique. Typiquement, un tel programme comporte une pluralité de fonctions prédéterminées distinctes les unes des autres. Chacune de ces fonctions prédéterminées est réalisée, dans le code binaire compilé, par une ou de plusieurs instructions prédéterminées. Comme le dictionnaire d'équivalences est construit une fois pour toutes lors de la compilation, il doit contenir les variantes de toutes les instructions prédéterminées réalisant chacune de ces fonctions. Un tel dictionnaire présente donc une taille importante. Ce dictionnaire d'équivalences est ensuite chargé dans sa totalité en mémoire à chaque fois que le microprocesseur exécute une portion du code binaire qui correspond à une des fonctions prédéterminées du code source. Du fait de la conception du générateur de code, ces portions du code binaire doivent donc chacune faire appel à ce dictionnaire d'équivalence lors de leur exécution, en dépit du fait qu'une partie des variantes contenues dans ce dictionnaire d'équivalences n'est pas apte à être utilisée comme variante pour la fonction prédéterminée décrite par cette portion de code binaire. En outre, l'exécution des étapes de normalisation et de recherche d'équivalence pour modifier chaque instruction nécessite un nombre important de cycles de calcul.

Ce procédé présente donc de nombreux inconvénients.

On connaît également le procédé décrit dans l'article d'Antoine Amarilli et al., « Can code polymorphism limit information leakage? », WISTP 2011, Lecture Notes in Computer Science, vol. 6633, p. 1-21, Springer, 2011. Ce procédé décrit l'exécution d'un code binaire polymorphique. Dans ce procédé, le polymorphisme introduit se limite à la réorganisation des instructions du code binaire, séparées en tranches (« bucket » en langue anglaise) pour l'analyse de la séquence suivie par le programme et les variantes susceptibles d'êtres introduites. Ce procédé n'a été démontré que dans une implémentation en Scheme, où la réécriture du programme est effectuée par une approche « source-to-source ».

En outre, ce procédé présente comme inconvénients, notamment, de nécessiter des ressources informatiques importantes pour son exécution, en partie pour les mêmes raisons que le procédé de l'article de Agosta et al. présenté ci-dessus. Ce procédé a en outre comme inconvénient de nécessiter un support pour Scheme. A la connaissance des inventeurs, il n'existe pas de support pour les programmes Scheme dans les systèmes embarqués ou dans les cartes à puces communément utilisés.

De l'état de la technique est également connu des documents suivants :

- EP2343663 A1 (GEMALTO) ;
- Cristoph Herbst et al., « An AES Smart Card Implementation Résistant to Power Analysis Attacks », ACNS 2006, LNCS 3989, p. 239-252, Springer, 2006.

Il existe donc un besoin pour un procédé d'exécution sécurisée d'un programme informatique contre des attaques cryptologiques par canal auxiliaire, ce procédé pouvant être mis en oeuvre avec des ressources informatiques réduites.

L'invention propose donc un procédé d'exécution par un microprocesseur d'un code binaire polymorphique d'une fonction prédéterminée conforme à la revendication 1.

Dans le procédé ci-dessus, le générateur de code est spécifique à une seule fonction prédéterminée. Le choix de la variante de codage est réalisé uniquement parmi des variantes de codage de la même fonction prédéterminée. Ainsi, si un code comporte plusieurs fonctions prédéterminées différentes, alors ce code comporte un générateur spécifique pour chacune de ces fonctions prédéterminées et non pas, comme dans l'état de la technique, un moteur polymorphique capable de générer l'ensemble spécifique d'instructions cibles des différentes fonctions prédéterminées. Du fait que le générateur est spécifique il n'est donc pas nécessaire de procéder :

- à une recherche d'un ensemble spécifique d'instructions cibles de cette fonction prédéterminée dans un dictionnaire d'équivalences comportant non seulement plusieurs ensembles spécifiques d'instructions pour coder cette fonction prédéterminée mais également des ensembles spécifiques d'instruction pour coder d'autres fonctions prédéterminées ;
- à une dénormalisation de l'ensemble spécifique d'instructions sélectionné.

Ainsi, chaque générateur spécifique s'exécute en beaucoup moins de cycles de calcul de microprocesseur, et donc beaucoup plus rapidement que le générateur générique de l'état de la technique. Comme le générateur doit être exécuté pour chaque fonction prédéterminée, il est plus avantageux d'utiliser à la place un tel générateur spécifique. De plus, les variantes de codage sont directement intégrées dans le code binaire dans le procédé revendiqué. Ainsi, il n'est pas nécessaire de charger en mémoire le dictionnaire d'équivalences. Grâce à cela, le procédé revendiqué peut être mis en oeuvre avec des ressources informatiques réduites.

Les modes de réalisation du procédé peuvent présenter la caractéristique de la revendication 2.

Selon un autre aspect, l'invention concerne également un procédé d'exécution d'un code binaire d'une primitive cryptographique par un microprocesseur conforme à la revendication 3.

Selon un autre aspect, l'invention concerne également un code binaire polymorphique d'une fonction prédéterminée, conforme à la revendication 4.

Les modes de réalisation du code binaire peuvent présenter une ou plusieurs des caractéristiques des revendications 5 à 8.

Ces modes de réalisation présentent en outre les avantages suivants :

- en choisissant un opérande dont la valeur est fonction du même ou d'un autre aléa numérique, plusieurs variantes de codage peuvent être obtenues simplement à partir de cette seule variante, en fonction de la valeur prise par l'aléa numérique. Un nombre élevé de variantes additionnelles peut ainsi être généré à partir d'un nombre réduit de variantes de codage. On bénéficie ainsi d'une grande diversité de variantes de codage sans avoir besoin d'un dictionnaire contenant chacune de ces variantes, ce qui réduit l'empreinte mémoire nécessaire à l'exécution du code binaire ;
- en modifiant, en fonction de l'aléa numérique, l'ordre dans la mémoire d'au moins deux instructions de l'ensemble d'instructions cibles généré, plusieurs variantes de codage additionnelles peuvent être obtenues simplement à partir de cette seule variante ;
- en modifiant, en fonction de l'aléa, un opérande d'une instruction correspondant à un registre mémoire du microprocesseur, plusieurs variantes de codage additionnelles peuvent être obtenues simplement à partir de cette seule variante ;
- en modifiant, en fonction de l'aléa, la valeur littérale dans une instruction, plusieurs variantes de codage additionnelles peuvent être obtenues simplement à partir de cette seule variante ;
- en générant un ensemble d'instructions spécifiques réalisant une fonction traitant une donnée dont la valeur n'est connue qu'au moment de l'exécution du programme, et dans lesquelles la valeur de cette donnée est directement et uniquement contenue dans les opérandes de ces instructions spécifiques, la forme de l'instruction qui sera exécutée n'est connue qu'au moment de l'exécution.

Selon un autre aspect, l'invention concerne également un support d'enregistrement d'informations, comportant un code binaire polymorphique exécutable conforme à la revendication 9.

Selon un autre aspect, l'invention concerne également un procédé de construction d'un code binaire polymorphique conforme à la revendication 10.

L'invention sera mieux comprise à la lecture de la description qui va suivre, donnée uniquement à titre d'exemple non limitatif et faite en se référant aux dessins sur lesquels :

- la figure 1 est une illustration schématique d'un appareil électronique comportant un microprocesseur et un support d'enregistrement d'informations ;
- la figure 2 est une illustration schématique imagée d'un code binaire polymorphique enregistré sur le support d'enregistrement apte à être exécuté par le microprocesseur de la figure 1 ;
- la figure 3 est un organigramme de procédés de construction puis d'exécution du code binaire polymorphique de la figure 2 ;
- la figure 4 est une portion de code source d'un exemple de fonction prédéterminée pour laquelle le code binaire polymorphique de la figure 2 doit être construit au moyen du procédé de la figure 3 ;
- les figures 5 et 6 représentent des portions de code source pour réaliser la fonction prédéterminée de la figure 4 ;
- la figure 7 est une portion de code source pour réaliser un générateur spécifique du code binaire polymorphique de la figure 2 ;
- les figures 8 à 10 illustrent des instructions cibles générées par le générateur spécifique de code ;
- les figures 11A à 11D sont des illustrations schématiques de modes de réalisation pour la synchronisation entre le fonctionnement du générateur spécifique de code de la figure 2 et l'exécution des instructions cibles générées par ce générateur spécifique de code ;
- la figure 12 illustre schématiquement un flot de travail pour ajouter un générateur de code binaire dans un programme ;
- la figure 13 schématise un générateur de code binaire pour une description binaire compacte d'une architecture de jeu d'instructions (« Instruction set architecture » en langue anglaise) ;
- la figure 14 illustre schématiquement un flot de compilation d'une compilette ;
- la figure 15 schématise une chaîne de compilation.

Dans ces figures, les mêmes références sont utilisées pour désigner les mêmes éléments.

Dans la suite de cette description, les caractéristiques et fonctions bien connues de l'homme du métier ne sont pas décrites en détails.

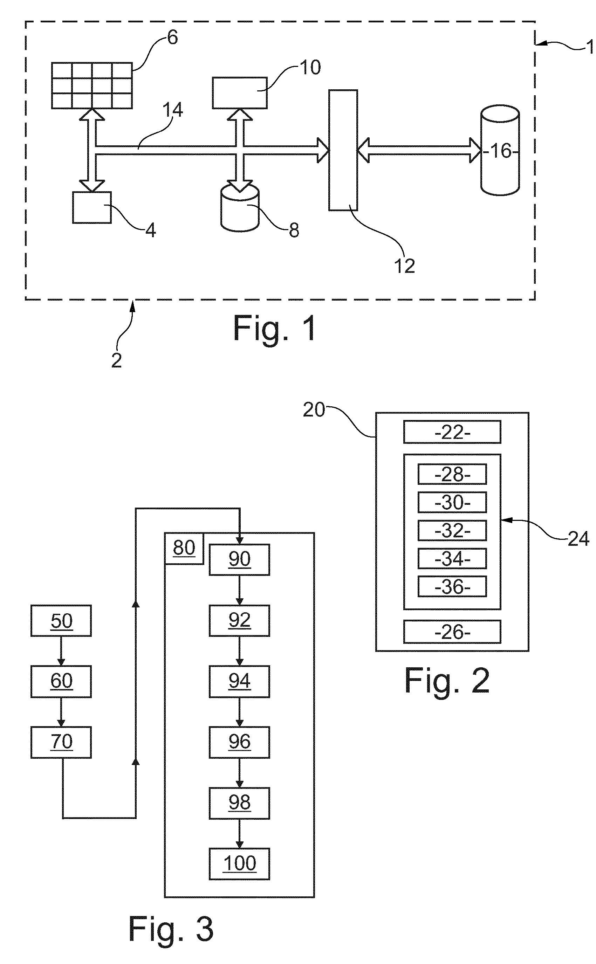

La figure 1 représente un appareil électronique 1 comportant un microprocesseur 2 et un support 16 d'enregistrement d'informations. Ce microprocesseur 2 comporte ici :

- une unité arithmétique et logique 4 ;
- un ensemble de registres 6 ;
- une mémoire programme 8;
- un module de commande 10 ;
- une interface 12 d'entrée/sortie de données.

La mémoire 8 est configurée pour stocker des instructions devant être exécutées par l'unité 4. Typiquement, le compteur ordinal du microprocesseur 2 pointe sur cette mémoire 8. L'unité 4 est notamment configurée pour exécuter les instructions stockées dans la mémoire 8, dans l'ordre où ces instructions sont stockées dans la mémoire 8, et, le cas échéant, à stocker le résultat de ces instructions exécutées dans un ou plusieurs des registres 6. Ici, on considère qu'une instruction, pour être exécutée par l'unité 4, doit être placée dans la mémoire 8. Dans cette description, on utilisera comme synonymes « exécution par le microprocesseur 2 » et « exécution par l'unité 4 ».

Le module 10 est configuré pour déplacer des instructions entre les registres 6, la mémoire 8, et l'interface 12. A cet effet, le microprocesseur comporte également ici un bus d'échange de données 14. L'interface 12 est notamment apte à acquérir des données, par exemple depuis le support 16 extérieur au microprocesseur 2. Le support 16 est par exemple une mémoire non volatile de type EEPROM ou Flash.

Un tel microprocesseur 2 est bien connu de l'homme du métier et ne sera pas décrit en détail. Dans cet exemple, le microprocesseur 2 est le microprocesseur MSP430 commercialisé par la société « Texas Instruments ».

La figure 2 représente un code binaire polymorphique 20 d'une fonction prédéterminée destiné à être exécuté par le microprocesseur 2. Ce code 20 comporte une succession d'instructions aptes à être exécutées par le microprocesseur 20. Ce code 20 est ici enregistré sur le support 16. Ainsi, ce code 20 peut être caractérisé en examinant les instructions enregistrées sur le support 16.

Dans cette description, les définitions suivantes sont adoptées.

Un « programme » désigne un ensemble d'une ou de plusieurs fonctions prédéterminées que l'on souhaite faire exécuter par le microprocesseur 2.

Un « code source » est une représentation du programme dans un langage informatique, n'étant pas directement exécutable par le microprocesseur 2 et étant destiné à être transformée en instructions par un compilateur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :

- d'un opcode, ou code d'opération, codant la nature de l'opération à exécuter, et
- d'un ou plusieurs opérandes définissant la ou les valeurs des paramètres de cette opération.

Un « code binaire » est un ensemble d'instructions machines. Il s'agit typiquement d'un fichier contenant une succession de bits portant la valeur « 0 » ou « 1 », ces bits codant les instructions à exécuter par le microprocesseur. Le code binaire est directement exécutable par le microprocesseur, c'est-à-dire sans nécessiter une compilation préalable.

On parlera d'exécution d'une fonction pour désigner l'exécution des instructions réalisant cette fonction.

Dans un souci de simplification, dans cette description, ces instructions ne sont pas représentées systématiquement sous forme binaire, mais plutôt sous une forme symbolique exprimée dans un langage machine ou assembleur. En particulier, l'opcode est représenté de façon connue par un mnémonique.

Plus précisément, le code 20 comporte :

- un bloc d'instructions 22 pour obtenir un aléa numérique (« random number » en langue anglaise) ;
- au moins un bloc d'instructions, appelé générateur 24 spécifique, apte à générer, lorsqu'il est exécuté par le microprocesseur 2, uniquement un ensemble d'instructions, dites instructions cibles, qui réalise la fonction prédéterminée lorsqu'il est à son tour exécuté par le microprocesseur 2.
- un bloc d'instructions, dites de contrôle 26, aptes à placer dans la mémoire 8 l'ensemble d'instructions cibles généré par le générateur 24.

Le bloc 22 comporte par exemple la lecture d'une source de nombres pseudo-aléatoires. Ici, pour simplifier la description, cette source utilise les routines pour la génération de nombres pseudo-aléatoires se trouvant dans les bibliothèques systèmes d'un système POSIX, telle que celle fournie par la routine « rand() » du fichier d'en-tête « stdlib.h » de la bibliothèque standard C. Ici, au préalable, le générateur de nombre aléatoires « srand() » est initialisé avec une graine « ALEA_SEED » prédéfinie. Dans le cas simplifié décrit ici, le bloc 22 fournit ici comme résultat la valeur d'un nombre pseudo-aléatoire entier supérieur ou égal à 0 et inférieur ou égal à la valeur « RAND_MAX » définie dans le fichier d'en-tête « stdlib.h ».

Le générateur 24 comporte ici :

- un bloc d'instructions codant une pluralité de variantes 28 de codage de la fonction prédéterminée,
- des instructions de sélection 30 ;
- un module 32 d'allocation de registres ;
- un module 34 de traduction d'instructions ;
- un module 36 d'ordonnancement d'instructions, par la suite appelé « ordonnanceur 36 » .

Les instructions des modules 32, 34 et de l'ordonnanceur 36 peuvent être situées à l'intérieur du générateur 24 ou à l'extérieur. Si les instructions des modules 32, 34 et de l'ordonnanceur 36 sont situées à l'extérieur, alors le générateur 24 comporte un renvoi vers ces instructions. Le renvoi est, par exemple, réalisé avec une instruction « JMP » en langage machine.

Chacune des variantes 28 génère, lorsqu'elle est exécutée par le microprocesseur 2, un ensemble spécifique d'instructions cibles réalisant la fonction prédéterminée. Chaque variante de codage est ainsi apte à produire un ensemble spécifique d'instructions qui est différent de l'ensemble d'instructions cibles généré par les autres variantes de codage mais qui sont tous fonctionnellement équivalents. Deux ensembles d'instructions sont dits fonctionnellement équivalents s'ils produisent, lorsqu'ils sont exécutés par le microprocesseur, le même résultat à partir des mêmes données en entrée. Chacun de ces ensembles spécifiques d'instructions cibles se distingue les uns des autres par au moins :

- un opcode différent, ou
- une valeur littérale différente, ou
- un nombre d'instructions différent.

Les instructions 30 permettent de choisir, parmi la pluralité de variantes 28, en fonction de l'aléa numérique acquis par l'exécution des instructions 22, une variante de codage à exécuter pour générer un ensemble spécifique d'instructions cibles qui formera l'ensemble d'instructions cibles.

Le module 32 est un bloc d'instructions configuré pour allouer, lorsqu'il est exécuté par le microprocesseur 2, un ou plusieurs registres de l'ensemble 6 pour l'exécution d'instructions sur l'unité 4. Un tel module 32 est connu en soi. Ce module 32 réalise cette affectation notamment en fonction d'une valeur d'un aléa numérique. Par exemple, ce module 32 comporte des instructions aptes à modifier, en fonction de la valeur de l'aléa numérique, la valeur d'un opérande d'une instruction correspondant à l'identifiant d'un registre mémoire de l'ensemble 6. Ici, à cet effet, le module 32 comporte un bloc d'instructions pour acquérir une valeur d'un aléa numérique. Par exemple, ce module 32 est réalisée en implémentant les fonctionnalités du procédé de renommage de registre décrites dans le document WO 02/054228 A1. A titre d'exemple, ici, ce module 32 associe un registre « r5 » de l'ensemble 6 à un identifiant « A » de registre si la valeur de l'aléa numérique est paire et, sinon, il l'associe à un registre « r9 ».

Le module 34 est un bloc d'instructions configuré pour générer les instructions cibles à partir des variantes de codage 28.

L'ordonnanceur 36 est un bloc d'instructions configuré pour modifier, en fonction d'un aléa numérique, l'ordre dans lequel les instructions cibles doivent être exécutées par l'unité 4. Cet ordonnanceur 36 reçoit en entrée :

- une valeur d'un aléa numérique, et
- une ou plusieurs instructions générées par le module 34 et auxquelles le module 32 a affecté un ou plusieurs registres 6.

Cet ordonnanceur 36 fournit en sortie les instructions cibles dans l'ordre où elles doivent être exécutées par le microprocesseur 2. Ces instructions cibles sont alors enregistrées par l'ordonnanceur 36 dans la mémoire 8.

Par exemple, cet ordonnanceur 36 place automatiquement ces instructions reçues dans une file d'attente et les inspecte les une après les autres pour déterminer les modifications d'ordonnancement possibles tout en conservant les dépendances sémantiques pouvant exister entre ces instructions. Dans cet exemple, la file d'attente est une file d'attente circulaire comportant une pluralité de positions et deux marqueurs, dits respectivement « tête » et « queue ». Les positions de la file d'attente sont ordonnées, et chaque position de la file d'attente est apte à stocker une instruction. Le marqueur de tête désigne la première instruction de la file et le marqueur de queue désigne la position suivant celle de la dernière instruction de la file. Ici, cette file d'attente est enregistrée dans une mémoire du microprocesseur 2. Pour chaque instruction stockée dans chaque position de la file, l'ordonnanceur 36 est apte à mémoriser :

- les registres, dits « defs » dans lesquels cette instruction écrit, et
- les registres, dits « uses », lus par cette instruction.

Lorsque l'ordonnanceur 36 reçoit une instruction du module 34, il la place dans la file. L'ordonnanceur 36 fonctionne comme suit ; d'abord, la tête et la queue sont initialisés et désignent chacun la première position de la file d'attente. Puis, pour chacune des instructions fournies à l'ordonnanceur par le module 34, les étapes suivantes sont réalisées :

- si la file n'est pas vide et que les marqueurs de tête et de queue désignent la même position, alors cela signifie que la file est pleine. La première instruction dans la file est alors vidée en réalisant les opérations suivantes :

  • l'instruction contenue dans la position de tête est placée dans la mémoire 8 ;
  • la position de la tête est incrémentée, c'est-à-dire qu'elle est déplacée d'une position depuis sa position courante et continue à être incrémentée tant que la position suivant celle de la tête ne contient aucune instruction ;

si la file n'est pas pleine, alors :

- l'instruction fournie par le module 34 est insérée en queue de file ,
- un aléa numérique est acquis. Si la valeur de cet aléa numérique est strictement inférieure à la taille de la file, alors il est stocké dans une variable, notée ici « h ». Sinon, des aléas numériques sont successivement acquis jusqu'à ce que cette condition soit remplie ;
- tant que « h » n'est pas nulle et que le résultat du test de dépendance ci-après défini est faux, alors les opérations suivantes sont répétées :

  • l'instruction fournie est déplacée dans la file d'une position en direction de la tête de la file ;
  • la valeur de « h » est décrémentée.

- enfin, la position du marqueur de queue est incrémentée.

Le test de dépendance renvoie la valeur logique « vrai » si une des conditions suivantes est vérifiée, et renvoie la valeur logique « faux » dans le cas contraire :

- l'instruction fournie a au moins un « defs » avec les « defs » de l'instruction située dans la position immédiatement précédente dans la file ;
- l'instruction fournie a au moins un « uses » en commun avec les « uses » de l'instruction située dans la position immédiatement précédente dans la file.

Un exemple des modules 32, 34 et de l'ordonnanceur 36 sera décrit plus en détail en référence au procédé de la figure 3.

Par exemple, ce code 20 est construit à l'aide d'une version modifiée du logiciel « deGoal » développé par les inventeurs. Ce logiciel « deGoal » permet notamment de créer un générateur de code binaire polymorphique. Le principe de fonctionnement de ce logiciel est décrit dans les articles suivants :

- Henri-Pierre Charles, « Basic infrastructure for dynamic code génération », workshop « Dynamic compilation everywhere », 7th HiPEAC conférence, janvier 2012.
- Damien Couroussé et al, « Dynamic code génération: an experiment on matrix multiplication », Proceedings of the work-in-progress session, LCTES 2012, juin 2012.

Dans ces articles, le générateur 24 est désigné sous le terme de « compilette » et l'ensemble d'instructions cibles est désigné sous le terme de « kernel ».

Ce logiciel « deGoal » est cependant modifié de façon à ce que la génération du code :

- ne dépend pas de données fournies en entrée de la fonction prédéterminée à exécuter, et
- dépende d'un ou plusieurs aléas numériques.

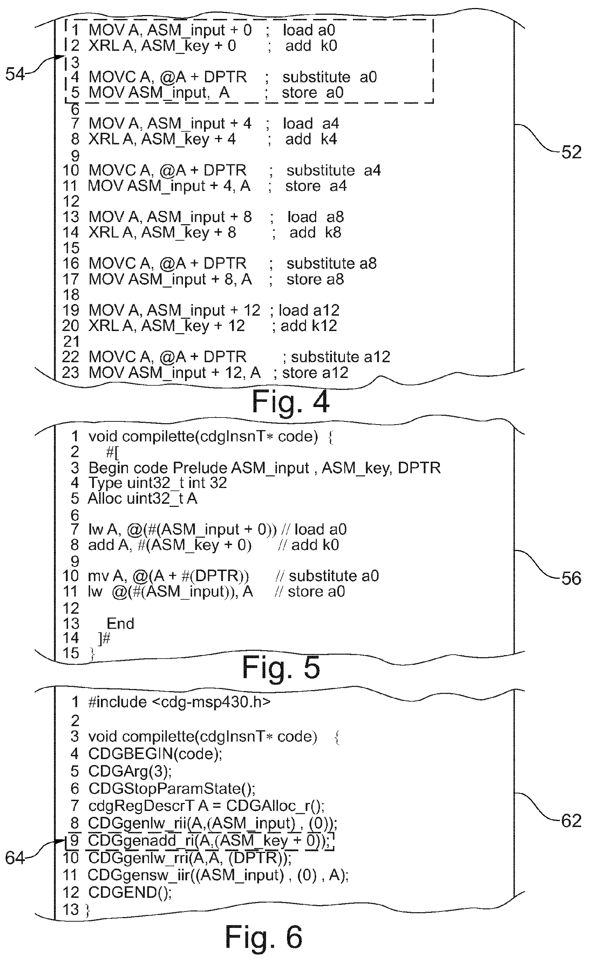

Un exemple de génération du code 20 va maintenant être décrit plus en détail en référence à l'organigramme de la figure 3 et à l'aide des figures 4 à 7.

Par exemple, un ordinateur comporte le logiciel « deGoal » modifié de la façon précédemment mentionnée, que l'on nommera pré-compilateur, ainsi qu'un compilateur.

Cette modification du logiciel « deGoal » n'altère cependant pas fondamentalement le procédé de construction d'un code au moyen de ce logiciel « deGoal ». Aussi, les étapes de construction du code 20 ne seront pas décrites en détails. Des descriptions de fonctionnalités de base de ce logiciel « deGoal » pour construire un code binaire polymorphique sont décrites dans sa documentation, qui comporte par exemple le manuel du logiciel « deGoal » de Pierre-Henri Charles, « DeGoal Documentation : Dynamic Execution of Generated Optimized kernel from Algorithmic Level », 2013. Une copie de ce manuel est fournie dans l'annexe de la présente description.

Lors d'une étape 50, un programme prédéterminé devant être exécuté est acquis automatiquement par l'ordinateur.

Ici, le programme prédéterminé comporte une primitive cryptographique, que l'on souhaite exécuter sur le microprocesseur 2 de façon à se prémunir contre des attaques cryptologiques par canal auxiliaire. Cette primitive comporte l'algorithme de chiffrement connu sous le nom « Advanced Encryption Standard » (AES). La figure 4 représente un extrait 52 de ce programme. Plus précisément, cette figure 4 représente l'implémentation d'une étape de ce programme, telle que proposée par Mangard et al. dans l'ouvrage « Power analysis attacks : revealing the secrets of smart cards », vol. 31, Springer-Verlag New York Inc., 2007 (figure B.10 de cet ouvrage). Cet extrait 52 est ici exprimé sous forme d'instructions en langage machine pour un microprocesseur générique de type 8051. Toutefois, à ce stade, le code 20 correspondant à cet extrait 52 n'est pas encore construit sous forme binaire.

Les numéros situés sur la gauche de la figure 4 sont les numéros des lignes de ce fichier auxquels on se réfère par la suite. Ces numéros de ligne ne font pas partie des instructions. Il en va de même pour les figures 5 à 10.

Les commentaires situés après le caractère « ; » sur les lignes du fichier de la figure 4 ne font pas partie des instructions.

Pour simplifier la description, la génération du code polymorphique est uniquement décrite en détail pour les instructions des lignes 1 à 5 de la figure 4. La génération du code polymorphique pour les autres lignes du programme se déduit des explications données pour ces lignes 1 à 5. Les fonctions de ces lignes 1 à 5 forment donc ici un ensemble 54 de fonctions prédéterminées. Dans ce mode de réalisation particulier, chaque fonction prédéterminée correspond à une instruction en langage machine. De façon connue, cet ensemble 54 réalise les quatre premières opérations d'un « tour » de cet algorithme AES. Plus précisément, cet ensemble réalise une addition entre un élément $a_0$ (noté « ASM_input » dans le langage machine) d'une première matrice et un élément $k_0$ (noté « ASM_key » dans le langage machine) d'une seconde matrice. La valeur numérique de l'élément $a_0$ est chargée dans un registre A d'un microprocesseur, puis la valeur numérique de l'élément $k_0$ y est ajoutée. Cet ensemble 54 est ici implémenté par les quatre fonctions suivantes :

- charger la valeur numérique de la variable $a_0$ dans un registre A d'un microprocesseur ;
- appliquer l'opération logique XOR entre la valeur numérique de la variable $k_0$ et la valeur numérique stockée dans le registre A ;
- charger le résultat de cette opération dans le registre A, puis
- charger la valeur contenue à l'adresse contenue dans le registre A additionnée de la valeur DPTR vers la variable $a_0$, DPTR indiquant l'adresse de la table de constantes S-box (« S-box table » en anglais), illustrée dans la figure B.5 de l'ouvrage de Mangard et al. précédemment cité.

Notons qu'il ne s'agit qu'une description générique de l'ensemble 54 pour en définir la fonctionnalité. La forme de l'ensemble spécifique d'instructions utilisé pour réaliser ces fonctions de l'ensemble 54 ne sera connue qu'au moment de l'exécution de l'ensemble 54 par le microprocesseur 2.

Dans cet exemple, cet ensemble 54 est d'abord acquis sous la forme d'un code source. Ici, pour ce faire, un fichier 56 contenant le code source de cet ensemble 54 est acquis automatiquement par l'ordinateur.

La figure 5 illustre en détail un exemple de ce code source contenu dans ce fichier 56. Ici, le code source contient des portions de code en langage C et des portions de code dites intermédiaires écrites dans un langage intermédiaire. Ce langage intermédiaire est apte à être transcrit en langage C dans la forme illustrée figure 6, qui est apte à être à son tour compilé pour former le code 20. Ces fonctions décrites en ce langage intermédiaire peuvent être paramétrées en fonction de variables dont les valeurs ne sont pas connues au moment de la compilation mais qui seront connues au moment de l'exécution du code 20. Ici, les fonctions de l'ensemble 54 sont entièrement et uniquement encodées dans ce langage intermédiaire.

Le langage C est défini par la norme ANSI de façon connue par l'homme du métier.

Ici, le langage intermédiaire est le langage « cdg ». Une description plus précise du langage « cdg » et de sa syntaxe est fournie dans la documentation précédemment citée du logiciel « deGoal » et ne sera donc pas reprise en détails ici.

La portion de code en langage cdg dans le fichier 56 est délimitée par les symboles « #[ » et « ]# ». Cette portion de code comporte ici :

- la définition des variables des fonctions de l'ensemble 54 (ligne 3) ;
- la définition de l'adresse, contenue ici dans la variable « code », à partir de laquelle les instructions processeur seront écrites par le générateur de code (ligne 3)
- la définition du type des variables (ligne 4) ;
- la définition et l'allocation d'un registre microprocesseur pour l'exécution de la fonction 54 (ligne 5), et
- la définition des quatre fonctions de l'ensemble 54 (lignes 7 à 11) précédemment énumérées.

Les portions de ligne débutant avec le caractère « // » sur le fichier de la figure 5 sont des commentaires qui peuvent être omis.

Les variables sont ici :

- ASM_input, qui correspond à l'adresse mémoire de la variable $a_0$ ;
- ASM_key, qui correspond à la variable $k_0$ ;
- DPTR, un pointeur vers un registre du microprocesseur ;
- une variable interne A, correspondant à un registre du microprocesseur.

A ce stade, les valeurs numériques respectives de ces variables ne sont pas encore connues.

Les fonctions de l'ensemble 54 sont ici définies à partir des opérations définies dans l'extrait 52 en faisant appel à des expressions, en langage cdg, correspondant à des instructions machine exécutables sur le microprocesseur 2. Par exemple, l'expression « add A, #(ASM_key + 0) » à la ligne 8 de ce fichier 56 correspond à la fonction définie à la ligne 2 de l'extrait 52, c'est-à-dire l'application de l'opération logique XOR entre la valeur numérique de la variable $k_0$ et la valeur numérique stockée dans le registre A.

Lors d'une étape 60, les portions de code intermédiaires sont automatiquement pré-compilées par un pré-compilateur afin d'être transformées en langage C apte à être transformé à son tour en instructions machine par un compilateur. Ici, ce pré-compilateur est le logiciel « deGoal » modifié de la façon précédemment décrite. Dans cet exemple, ce pré-compilateur prend en entrée le fichier 56 acquis puis transforme :

- chaque portion de code écrit en langage cdg du fichier 56, ici délimitée par les symboles « #[ » et « ]# », en
- un code en langage C implémentant respectivement chaque portion de code en langage cdg.

La figure 6 représente un exemple de fichier 62 issu de cette pré-compilation, ou traduction, du fichier 56. Ce fichier comporte des appels à des routines écrites en langage C qui implémentent les fonctionnalités de la portion de code cdg du fichier 56. Ici, chacune des expressions en langage cdg correspondant aux quatre fonctions de l'ensemble 54 sont transcrites par des routines correspondantes.

Ici, chacune des routines des lignes 4 à 12 de ce fichier 62 correspondent au code source d'un générateur spécifique de code qui est apte à générer, lorsque le code binaire correspondant est exécuté par le microprocesseur 2, des instructions cibles réalisant la fonction correspondante du fichier 56. Ici, ces routines sont définies dans une autre portion du code source, comme la bibliothèque « cdg-msp430.h »

Par exemple, la routine 64 « CDGgenadd_ri(A,(ASM_key + 0) » correspond au code source du générateur 24. Dans cet exemple, le générateur 24 est apte à générer un ensemble d'instructions cibles pour réaliser la fonction prédéterminée « add A, #(ASM_key + 0) » du fichier 56, qui elle-même correspond à l'opération « XRL A, ASM_key + 0 » de l'extrait 52.

De même, les routines des lignes 8, 10 et 11 correspondent aux codes sources d'autres générateurs spécifiques aptes à générer les ensembles spécifiques d'instructions réalisant, respectivement, les fonctions prédéterminées des lignes 1, 4 et 5 de l'extrait 52.

Notons qu'à ce stade, le code 20 n'est pas encore créé. Cependant, afin de simplifier la description, les constituants du code 20 sont décrits en référence aux expressions en langage C de ce fichier 62, plutôt qu'aux instructions machine formant le code 20. En effet, la description d'une fonction en langage C présente une forme plus compacte et est plus facilement lisible par un humain qu'une description de cette même fonction en instructions machine correspondantes.

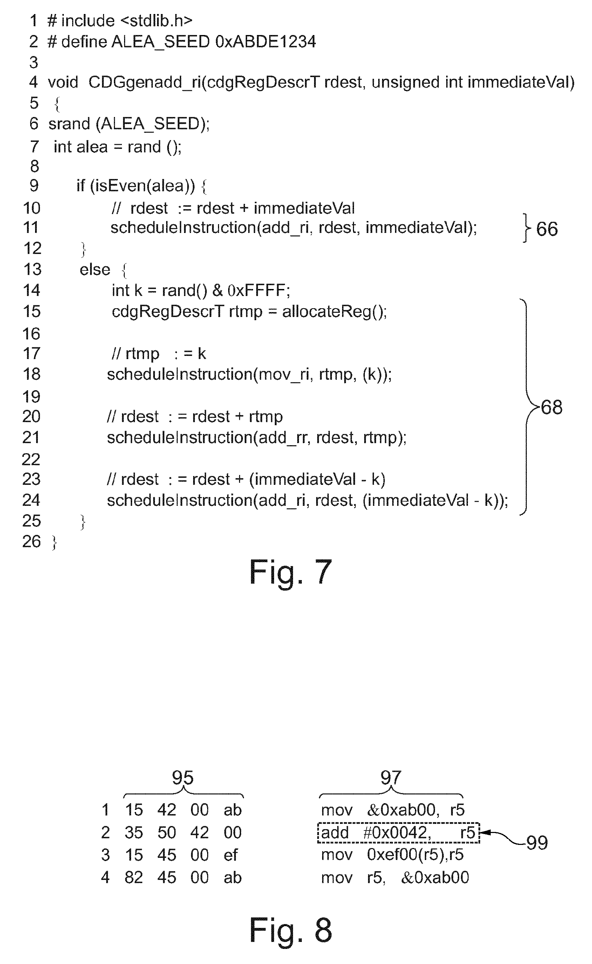

La figure 7 décrit plus en détail la routine 64 et donc le code source du générateur 24, notamment aux lignes 4 à 26. Pour simplifier, les autres routines ne sont pas décrites plus en détail. Des explications sur leur fonctionnement sont disponibles dans la documentation précitée du logiciel « deGoal » et les modifications à apporter pour qu'elles génèrent des ensembles spécifiques d'instructions cibles en fonction d'un aléa se déduisent des explications ci-dessous.

Cette routine 64 accepte en entrée les variables « rdest » et « immediateVal », qui correspondent, respectivement, aux valeurs des variables « A » et « ASM_key » précédemment définies. Le résultat de l'exécution de cette routine 64 est de générer un ensemble d'instructions cibles dont l'ordre est celui dans lequel elles seront exécutées par l'unité 4.

Cette routine 64 comporte :

- l'appel à la function « srand() », pour l'initialisation du générateur pseudoaléatoire en fonction de la graine « ALEA_SEED ».
- des instructions pour l'acquisition d'un aléa numérique (ligne 7), représentées par la procédure « rand() » ;
- des première 66 et seconde 68 variantes de codage de la fonction prédéterminée ainsi que
- des instructions 30 pour choisir une variante de codage à exécuter parmi ces variantes.

Ici, les instructions 30 sont formées par la structure conditionnelle « if/then/else » des lignes 9 à 24 qui a pour condition la parité de l'aléa acquis. Ces instructions 30 sont aptes à choisir la première ou la seconde variante de codage selon que la valeur de l'aléa est, respectivement, paire ou impaire.

La variante 66 de codage génère, lorsqu'elle est exécutée par le microprocesseur 2, l'instruction machine « ADD A, ASM_key + 0 » et transmet cette instruction générée à l'ordonnanceur 36. Cet ordonnanceur 36 insère l'instruction machine dans la mémoire 8 et, éventuellement, modifie l'ordre d'exécution de cette instruction, comme précédemment décrit, par rapport aux autres instructions cibles, en fonction d'une valeur d'un aléa.

Pour ce faire, une procédure « scheduleInstruction » est appelée en lui fournissant les paramètres « add_ri », « rdest » et « immediateVal ». Cette procédure comporte :

- le module 34, qui est apte à générer une instruction à partir d'un paramètre fourni, et
- l'ordonnanceur 36.

Ici, le paramètre « add_ri » indique au module de traduction 34 que l'instruction devant être générée est l'instruction portant l'opcode « ADD ». Cette procédure « scheduleInstruction » est définie dans le logiciel « deGoal ». De même, la correspondance entre l'opcode « ADD » et le paramètre « add_ri » est préalablement définie au sein du module 34 dans une portion du code non représentée ici. Le paramètre « rdest » est un identifiant d'un registre mémoire de l'ensemble 6, et le paramètre « immediateVal » est une valeur numérique.

La variante 68 de codage génère, lorsqu'elle est exécutée par le microprocesseur 2, un ensemble d'instructions cibles dans lequel l'opération d'addition est séparée en deux opérations d'additions distinctes. Cette séparation comporte l'utilisation d'un registre intermédiaire « rtmp » ainsi que d'une valeur intermédiaire « k », qui dépend d'un aléa numérique. Ainsi, le registre intermédiaire « rtmp » est alloué, et les instructions suivantes sont générées puis placées par l'ordonnanceur 36 dans la mémoire 8 :

- « MOV rtmp, k » ;
- « ADD A, rtmp » ;
- « ADD A, (ASM_key + 0 - k) ».

Pour ce faire, les procédures suivantes de la routine « CDGgenadd_ri » sont exécutées :

- la procédure « rand() » pour obtenir une nouvelle valeur de l'aléa numérique, que l'on affecte à la variable « k », distincte de la valeur « alea » (ligne 14) ; seuls les 4 bits de poids faible de la valeur fournie par la procédure « rand() » sont ici utilisés, après application du masque binaire OxFFFF à l'aide du « et » logique ;
- la procédure « allocateReg() » pour exécuter le module 32 de façon à allouer le registre temporaire « rtemp » à l'un des registres de l'ensemble 6 (ligne 15) ;
- la procédure « scheduleInstruction » est appelée trois fois, en fournissant, respectivement, les paramètres suivants :

  - « mov_ri », « rtmp » et « k » (ligne 18) ;
  - « add_ri », « rdest » et « rtmp » (ligne 21) ;
  - « add_ri », « rdest » et « (immediateVal - k) » (ligne 24).

Ici, « rtmp » est un identifiant d'un registre mémoire de l'ensemble 6. Le paramètre « mov_ri » indique au module de traduction 34 que l'instruction devant être générée est l'instruction portant l'opcode « MOV ». Le paramètre « add_rr » indique au module de traduction que l'instruction devant être générée est l'instruction portant l'opcode « ADD » mais dont les opérandes sont des identifiants de registres mémoire de l'ensemble 6.

De multiples aléas sont ainsi cumulés : dans l'une des opérandes de l'une des instructions d'additions, dans l'affectation du registre intermédiaire « rtemp » et enfin dans l'ordonnancement des instructions par l'ordonnanceur 36.

Le choix de la variante à exécuter est uniquement possible entre des variantes de codage définies dans le générateur 24. Il n'est donc pas nécessaire de passer en argument du générateur un identifiant de la fonction prédéterminée, comme cela est le cas dans le procédé décrit dans l'article précité de Agosta et al. pour l'étape de normalisation de ce procédé.

Ensuite, lors d'une étape 70, ce fichier 62 est automatiquement compilé pour former le code binaire 20. Ce compilateur est notamment configuré pour transformer un code C ANSI en instructions machine exécutables sur le microprocesseur 2. Par exemple, ce compilateur est le compilateur « gcc » version 4.6.3 configuré pour être compatible avec l'architecture du microprocesseur 2. Ici, en outre, le code en langage C issu de la pré-compilation est placé dans un même fichier que code source en C initialement acquis lors de l'étape 50 de sorte à ce que ces codes soient compilés lors d'une même opération de compilation.

Le code binaire 20 est ensuite exécuté automatiquement par le microprocesseur 2 lors d'une étape 80. Un exemple d'exécution du code 20 va maintenant être décrit en détail, en référence à l'organigramme de la figure 3 et à l'aide des figures 4, 7 et 8. L'exécution de ce code 20 est décrite pour les fonctions de l'ensemble 54 et, plus précisément, pour la fonction de la ligne 2 de cet ensemble.

Lors d'une opération 90, le code 20 est automatiquement acquis par le microprocesseur 2. Par exemple, le module 10 charge ce code depuis le support 16 au travers de l'interface 12 vers un espace mémoire volatile, puis en charge les instructions de ce code 20 dans la mémoire 8 pour que l'unité 4 les exécute dans l'ordre où elles se présentent. Ainsi, les générateurs spécifiques des fonctions prédéterminées de l'ensemble 54 sont exécutés tour à tour. Pour simplifier, on ne détaillera que l'exécution du générateur 24. L'exécution du générateur 24 conduit le microprocesseur 2 à exécuter les opérations suivantes.

Lors d'une opération 92, l'exécution du bloc 22 d'instructions correspondant à la ligne 11 de la figure 7 conduit le microprocesseur 2 à acquérir un aléa numérique.

Ici, les instructions du bloc 22 correspondant à la fonction « rand() ». Cet aléa acquis est stocké dans une variable interne, ici notée « alea », et enregistrée dans une mémoire du microprocesseur 2.

Puis, lors d'une opération 94, en exécutant les instructions 30, une variante de codage à exécuter est choisie automatiquement en fonction de la valeur de l'aléa précédemment acquise. Dans cet exemple, la valeur « alea » est paire : c'est donc la variante de codage 66 qui est choisie.

Ensuite, lors d'une opération 96, la variante 66 est automatiquement exécutée, ce qui génère l'ensemble d'instructions cibles réalisant la fonction prédéterminée de la ligne 2 de l'ensemble 54.

Ensuite, lors d'une opération 98, l'ensemble d'instructions cibles ainsi généré est placé, par l'exécution de l'ordonnanceur 36, dans la mémoire 8 pour être exécuté par l'unité 4 lors d'une opération 100.

Ici, les opérations 96 et 98 sont réalisées en exécutant les instructions correspondant, dans le code source de la figure 7, à la procédure « scheduleInstruction(add_ri, rdest, immediateVal) », où les variables « rdest » et « immediateVal » sont respectivement affectées des valeurs des variables « A » et « (ASM_key + 0) » (comme indiqué figure 6). Cette procédure place dans la mémoire 8 une instruction « ADD » ayant pour opérandes le registre « A » préalablement associé à l'un des registres de l'ensemble 6 et la valeur numérique « (ASM_key + 0) ». Ici, l'opération 98 est réalisée lors du placement de cet opérande dans la file du module 36.

Les figures 8 à 10 représentent trois ensembles spécifiques d'instructions générés pour les quatre fonctions de l'ensemble 54 lors de trois exécutions successives du code binaire 20 par le microprocesseur 2. Les parties 95 et 97 représentent respectivement, le code binaire en hexadécimal tel qu'il est stocké dans la mémoire 8 du processeur 2, et le code en langage machine des instructions générées. Ces trois exécutions du code binaire 20 sont réalisées avec les mêmes données d'entrée. Dans cet exemple, les variables « ASM_input », « ASM_key » et « DPTR » ont respectivement les valeurs numériques, en notation hexadécimale, « 0xab00 », « 0x0042 » et « 0xEF00 ». De plus, ici, lors de ces exécutions du code 20, le registre affecté à la variable A est le registre « r5 » de l'ensemble 6. Dans ces exemples des figures 8 à 10, les opérandes des instructions présentent un ordre différent de l'ordre des opérandes des instructions décrites en référence aux figures notamment 4 à 6. Cette différence d'ordre est ici due à la syntaxe spécifique du jeu d'instructions du microprocesseur MSP430, qui est différente de la syntaxe générique utilisée précédemment.

La figure 8 représente l'ensemble d'instructions généré lors de la première exécution. Lors de cette première exécution, la valeur de l'aléa est paire. L'instruction 99 représente plus particulièrement l'instruction générée par l'exécution du générateur 24 et de la variante 66. L'instruction 99 s'écrit donc « add #0x0042, r5 ».

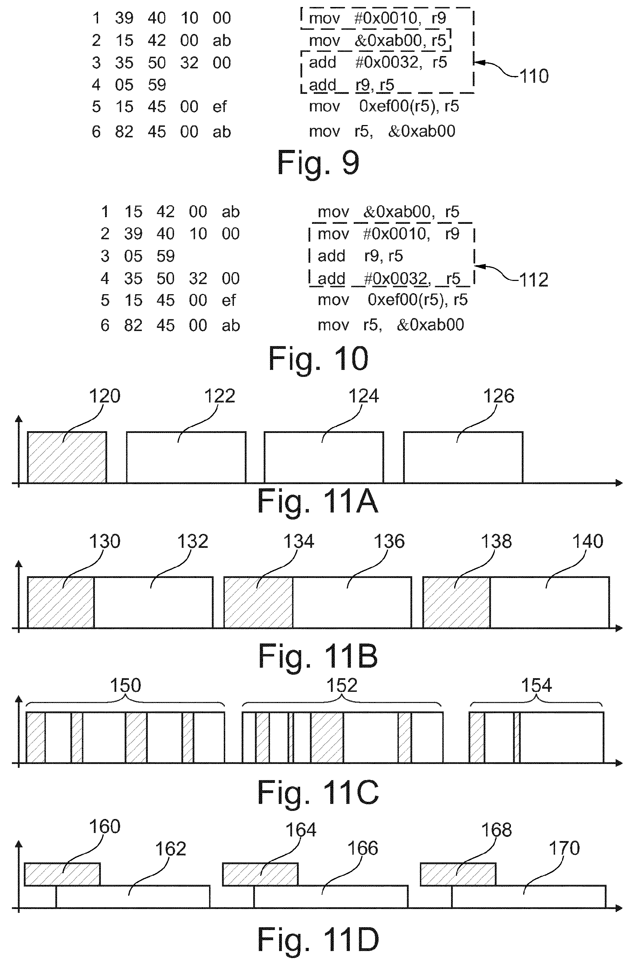

Les figures 9 et 10 représentent les ensembles d'instructions cibles générés par le générateur 24, lors des deuxième et troisième exécutions du code 20 par le microprocesseur 2. Lors de ces deuxième et troisième exécutions, on suppose que la valeur de l'aléa est impaire. C'est donc l'exécution de la variante 68 qui génère l'ensemble spécifique d'instructions cibles à chaque fois. De plus, on suppose que lors de ces deux exécutions, la valeur de l'aléa noté « k » dans la figure 7 est égale à « 16 », c'est-à-dire « 0x10 » en notation hexadécimale. On suppose aussi que le registre « rtmp » de la figure 7 est associé au registre « r9 » de l'ensemble 6 par l'exécution de la routine de la ligne 19 de la figure 7.

Dans la figure 9, les instructions cibles sont identiques à celles de la figure 8, sauf que l'instruction 99 est remplacée par un ensemble 110 d'instructions cibles, qui présentent une forme différente mais qui sont fonctionnellement équivalentes à l'instruction 99. L'instruction 99, qui consistait à ajouter la valeur instantanée « 0x42 » à la valeur contenue dans le registre « r5 », est remplacée par les instructions suivantes des lignes 1 et 3 à 4 :

- ajouter la valeur « 0x10 » à la valeur stockée dans un registre intermédiaire « r9 » de l'ensemble 6 ;
- ajouter la valeur « 0x32 », obtenue en soustrayant la valeur « k » à a valeur de « ASM_key », à la valeur stockée dans le registre « r5 » ;
- ajouter la valeur stockée dans le registre « r9 » à celle stockée dans le registre « r5 ».

Autrement dit, au lieu de faire l'addition « r5 := r5 + 0x42 », l'ensemble 110 fait les opérations « r9 := 0x10 », « r5 := r5 + 0x32 » puis « r5 := r9 + r5 » (où «:= » symbolise l'opération d'affectation à un registre). Dans cet exemple, les instructions de l'ensemble 110 ne sont pas consécutives dans la mémoire 8. Cela est causé par le fait qu'ici l'ordonnanceur 36 a modifié l'ordre des instructions contenues dans la mémoire 8, notamment en intercalant l'instruction de la ligne 2 entre deux instructions de l'ensemble 110. Cette instruction de la ligne 2 correspond à la fonction prédéterminée de la ligne 1 de la figure 4 et a été précédemment générée par un générateur spécifique contenu dans le code 20.

Dans l'exemple de la figure 10, l'ensemble 112 d'instructions cibles généré par le générateur 24 est identique à celui de la figure 9. Toutefois, cette fois, l'exécution de l'ordonnanceur 36 a conduit à un ordonnancement des instructions de l'ensemble 112 qui est différent. Ici, les lignes 1 et 2 ont été permutées par rapport au cas de la figure 9. Ces instructions cibles correspondent toujours à la seconde variante de codage, mais l'ordre dans lequel elles sont exécutées a été modifié par le module 36, en fonction d'un aléa numérique.

Ainsi, les instructions de sélection 30 sont configurées de façon à ce que le choix de la variante de codage soit réalisé uniquement parmi les variantes de codage de ladite fonction prédéterminée. Ici, ce sont celles qui sont contenues dans le fichier de la figure 7. De fait, le générateur 24 comporte uniquement des variantes de codage qui sont spécifiques à la fonction prédéterminée et seulement à celle-ci. Il n'est alors pas requis d'exécuter des opérations de dénormalisation et de recherche dans un dictionnaire d'équivalences. De plus, il n'est pas non plus nécessaire de maintenir en mémoire un dictionnaire d'équivalences qui contiendrait des variantes de codage d'une autre fonction. Les ressources informatiques nécessaires pour exécuter ce code 20 sont ainsi réduites en terme de nombre de cycles de calcul et de ressources mémoire utilisées par rapport au cas connu. De plus, comme on l'a vu avec les exemples des figures 8 à 10, la combinaison d'aléas numériques supplémentaires lors de l'opération 96 permet de générer un grand nombre de variantes d'instructions cibles avec seulement un nombre réduit de variantes de codage (en l'occurrence, seulement deux variantes de codage dans le fichier de la figure 7).

En particulier, les inventeurs ont déterminé que le présent procédé nécessite des ressources informatiques moindres que celles du procédé décrit par Agosta et al. dans l'article précédemment cité. En effet, dans ce dernier, les inventeurs ont pu estimer, à partir des données de la section 4 de cet article, que ce procédé nécessite environ 187000 cycles de calcul pour générer une instruction équivalente à partir du dictionnaire d'équivalences. Par comparaison, le présent procédé ne nécessite que 30 à 300 cycles de calcul pour générer une instruction cible sur le microprocesseur MSP430, le temps de génération de l'instruction cible variant en fonction de l'instruction cible et de la quantité de traitements pour l'exploitation de l'alea. Dans tous les cas, pour un microprocesseur ARM, dont l'architecture est proche de la plateforme d'expérimentation utilisée par Agosta et al., le temps de génération du présent procédé est toujours strictement inférieur à 1000 cycles de calcul pour générer une instruction cible. Les inventeurs ont en outre déterminé que, pour le processeur RISC STxP70, et sans que le mécanisme de génération de code polymorphique décrit dans cette invention soit utilisé, le procédé de génération dynamique de code avec « deGoal » nécessite à lui seul entre 25 et 80 cycles par instruction cible.

Ainsi, il est possible de mettre en oeuvre ce procédé sur des systèmes informatiques présentant des ressources réduites, comme des systèmes embarqués ou des cartes à puce. En effet, de tels systèmes incorporent typiquement des microprocesseurs de conception simplifiés, généralement à 8 bits ou à 16 bits, et possèdent une mémoire limitée (typiquement, de l'ordre du kilo-octet pour la mémoire RAM et de l'ordre de la dizaine de kilo octets pour la mémoire non volatile).

Les figures 11A à 11D représentent des modes de réalisation de l'exécution du code 20 sur le microprocesseur 2. Plus précisément, ces figures représentent les possibilités de synchronisation temporelle entre, d'une part, les phases de génération de l'ensemble d'instructions cibles par le microprocesseur 2 (étapes 90 à 96) et, d'autre part, les phases d'exécution de ces instructions cibles par le microprocesseur 2 (étapes 98 et 100).

Sur ces figures, la ligne horizontale représente l'écoulement du temps. Les blocs comportant des hachures correspondent à l'exécution des phases de génération de l'ensemble d'instructions cibles par le microprocesseur 2, tandis que les blocs dépourvus de hachures correspondent à l'exécution de ces instructions cibles par le microprocesseur 2.

Dans l'exemple de la figure 11A, la phase de génération (bloc 120) est d'abord exécutée pour générer toutes les instructions cibles de toutes les fonctions du code 20. Puis, ces instructions correspondant à ces fonctions sont exécutées les unes après les autres lors de phases d'exécution successives (blocs 122, 124 et 126). Les phases de génération et d'exécution sont séparées. Cela permet de garantir une exécution rapide du code 20, mais peut introduire une faille de sécurité liée à la localité temporelle de l'exécution du code (« temporal locality » en langue anglaise). En effet, lorsque l'exécution d'un ensemble de fonctions débute systématiquement par l'exécution du générateur spécifique de code pour ces fonctions, un attaquant pourrait identifier la fenêtre temporelle pendant laquelle le microprocesseur exécute le générateur spécifique. Cet attaquant pourrait ainsi acquérir des informations sur le fonctionnement du générateur spécifique.

Les exemples des figures 11B à 11D illustrent comment résoudre ce problème.

Dans l'exemple de la figure 11B, une phase de génération (blocs 130, 134 et 138) est réalisée avant la phase d'exécution (blocs 132, 136 et 140, respectivement) de chacune des fonctions du programme. Ainsi, dans ce cas, chaque ensemble d'instructions cibles généré est immédiatement exécuté par le microprocesseur 2. Dans la mesure où la longueur des phases d'exécution varie en fonction de l'aléa, un attaquant peut très difficilement déterminer quelles sont les plages d'exécution des différentes phases d'exécution.

Dans l'exemple de la figure 11C, pour chacune des fonctions, les phases de génération et d'exécution sont entrelacées. Ainsi, l'ensemble des instructions cibles est exécuté par morceaux au fur et à mesure de sa génération (blocs 150, 152 et 154).

Enfin, la figure 11D représente un mode de réalisation apte à être mis en oeuvre dans le cas où le microprocesseur 2 présente une architecture parallèle (par exemple du type désigné sous les termes « Symmetric multiprocessing », « multi-core » ou « many-core en langue anglaise). Dans cet exemple, pour chacune des fonctions du code 20, les phases de génération (blocs 160, 164 et 168) et d'exécution (blocs 162, 166 et 170, respectivement) sont réalisées en parallèle, par des unités de calcul distinctes de ce microprocesseur.

De nombreux autres modes de réalisation sont possibles.

D'autres modèles de microprocesseurs peuvent être utilisés que celui décrit.

En variante, le logiciel « deGoal » est remplacé par un générateur de code polymorphique, tel que le logiciel « GNU Lightning » disponible à l'adresse internet « http://www.gnu.org/software/lightning/ », ce logiciel étant néanmoins modifié pour, notamment, prendre en compte l'aléa numérique.

Les étapes 90 à 98 peuvent être réalisées sur un microprocesseur distinct ou une portion distincte du microprocesseur 2 de celui sur lequel l'étape 100 est réalisée.

Le microprocesseur 2 peut comporter plusieurs unités arithmétiques et logiques.

Les modules 32, 34 et l'ordonnanceur 36 peuvent être réalisés différemment. Par exemple, l'ordonnanceur 36 implémente les fonctions décrites dans le document WO 02/27478 A1 (UNIVERSITY OF BRISTOL). En variante, l'ordonnanceur 36 implémente les fonctionnalités du module décrit dans l'article précité de Agosta et al., à la section 3 de cet article, dans le paragraphe intitulé « Rescheduling »

Un autre langage peut être utilisé que le langage C.

Les instructions de sélection 30 peuvent être différentes d'une structure conditionnelle de type « if/then/else ». Par exemple, la sélection peut être réalisée au moyen d'une équivalence arithmétique entre deux opcodes, par exemple par application d'un masque binaire prédéfini. A titre d'exemple, une telle équivalence est ici illustrée dans un cas simple où les opcodes des instructions sont enregistrés sur 1 octet (soit 8 bits) ; l'opcode pour l'instruction de multiplication entière est 0x3, et l'opcode pour l'instruction de décalage à gauche est 0x2. Il est alors possible d'exprimer la multiplication par une valeur entière exprimable sous la forme 2^n où n est un entier naturel, comme étant un décalage à gauche de n bits. En fonction d'un aléa « x », il est par exemple possible de sélectionner l'opcode de l'instruction avec l'opération suivante : « opcode = (x & 0x2) », où « & » désigne l'opération « AND » bit-à-bit (« bitwise » en anglais).

Le code source acquis lors de l'étape 50 peut comporter des fonctions dont on ne souhaite pas qu'elles soient exécutées par un ensemble d'instructions cibles générées par un générateur spécifique tel que le générateur 24. C'est par exemple le cas pour un programme de taille importante dont on souhaite que seule une portion soit exécutée de façon sécurisée sur le microprocesseur 2. A cet effet, ces fonctions sont décrites en langage C et en dehors des portions de code intermédiaire. Dans ce cas, seules les fonctions correspondant à cette portion sont réalisées par le code 20. Les autres fonctions du programmes sont directement compilées par le compilateur lors de l'étape 70 pour générer un code binaire distinct du code 20 et étant directement exécutable par le microprocesseur.

En variante, le fichier acquis lors de l'étape 50 ne comporte que du code intermédiaire.

L'aléa numérique peut être différent. Par exemple, cet aléa est un nombre aléatoire. Cet aléa peut aussi être obtenu à partir d'une source matérielle de nombres aléatoires. Le bloc d'instructions 22 est alors modifié en conséquence. Dans le cas d'une application cryptologique, l'homme du métier saura adapter cette application à l'utilisation d'un générateur de nombre aléatoires. Dans le cas du microprocesseur 2 précédent décrit, l'homme du métier pourra par exemple utiliser l'implémentation pour le processeur MSP430 décrite dans le document « Random Number Génération Using the MSP430 », Application Report SLAA338, Texas Instruments, Octobre 2006.

L'acquisition des valeurs d'aléas peut être différente pour les modules 32, 34, 36 et/ou pour les instructions de sélection 30. Au contraire, une seule et même valeur d'aléa peut être acquise et ensuite utilisé par un ou plusieurs des modules 32, 34, 36 et/ou des instructions 30.

En variante, l'ordonnanceur 36 est configuré pour être compatible avec une architecture de microprocesseur « Very Long Instruction Word ».

L'exemple de la figure 11A peut néanmoins être mis en oeuvre pour des applications pour lesquelles on peut se permettre de dégrader un peu la sécurité pour améliorer la vitesse d'exécution du code 20.

Dans le mode de réalisation précédent, la fonction prédéterminée correspondait à une seule instruction en langage machine. Toutefois, en variante, ce qui a été précédemment décrit peut aussi être adopté au cas où la fonction prédéterminée correspond à un groupe de plusieurs structures en langage machine. Dans ce dernier cas, le générateur spécifique comporte différentes variantes de codage générant différents ensembles d'instructions cibles fonctionnellement équivalents à ce groupe d'instructions.

**ANNEXE**

Documentation DeGoal

Exécution dynamique d'un noyau optimisé généré à partir d'un niveau algorithmique

Henri-Pierre Charles

1 juillet 2013

1 Introduction

DeGoal est un outil permettant de créer un générateur de code binaire rapide de manière portable.

1.1 De quoi s'agit-il ?

Un générateur de code binaire est un outil capable de générer un code binaire (exécutable), au moment de l'exécution, sans utiliser la représentation assembleur (textuelle).

Il est conçu pour :

- Produire des générateurs rapides. La vitesse de génération de code de ces générateurs est variable selon l'architecture cible, mais d'une manière générale, la génération de code nécessite seulement quelques dizaines de cycles processeur par instruction générée.
- Facile à porter : envisager une nouvelle architecture nécessite simplement une description bas-niveau de l'architecture cible. Par exemple, les instructions de « addi » pour un processeur MIPS sont détaillées de la manière suivante :

```
001110 r1-5 r2-5 i1_15_0 | addi r1, r2, i1
```

Le processus de création d'un générateur dynamique multiple pour cette instruction est ensuite complètement automatique.

Le générateur peut être utile dans de nombreuses situations :

- Pour l'optimisation d'un code lors de l'exécution à l'aide de données en tant que paramètre d'optimisation
- Pour la génération d'un code vectoriel
- Pour la génération d'un code multimédia

1.2 Motivation

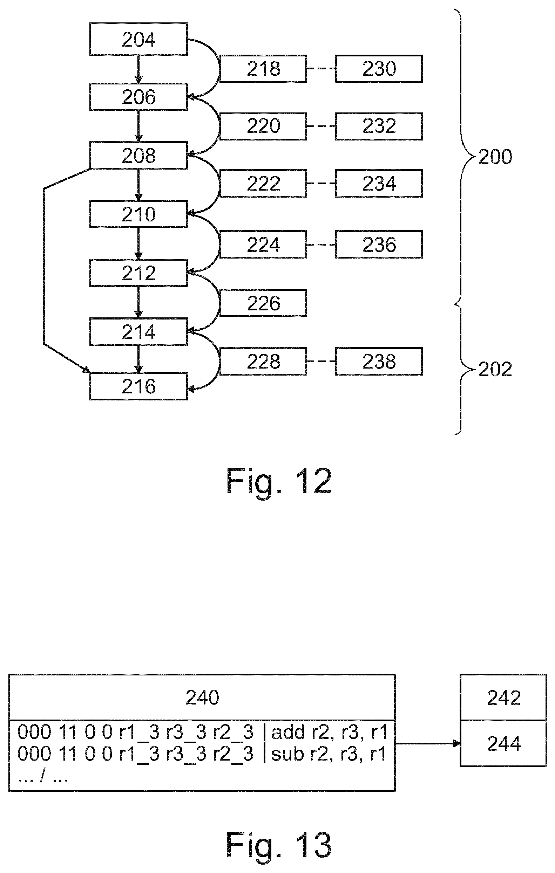

De manière générale, pour utiliser DeGoal, il faut ajouter un générateur de code, nommé compilette, qui devra générer dynamiquement du code. Cette idée est illustrée par la figure 12. La partie supérieure du schéma représente le processus de compilation traditionnel effectué lors de la compilation statique (ensemble d'étapes portant la référence 200). Nous ajoutons seulement deux étapes :

- « Hand written » est une petite portion du code C avec des blocs spéciaux chargés de générer le code binaire. Cette portion est facilement compréhensible par un lecteur humain connaissant le langage C.
- « CDG » doit convertir les blocs spéciaux précédemment mentionnés en code C automatiquement généré.

La partie inférieure du schéma représente l'exécution (« run time », ensemble d'étapes portant la référence 202) lors de laquelle la compilette génère du code en fonction des caractéristiques du jeu de données. Ce flux de compilation particulier permet de prendre en compte un niveau de paramètres très élevé qui sera utilisé au niveau le plus bas possible.

La figure 13 illustre le flot de compilation pour la génération d'un code binaire généré à l'aide d'une compilette.

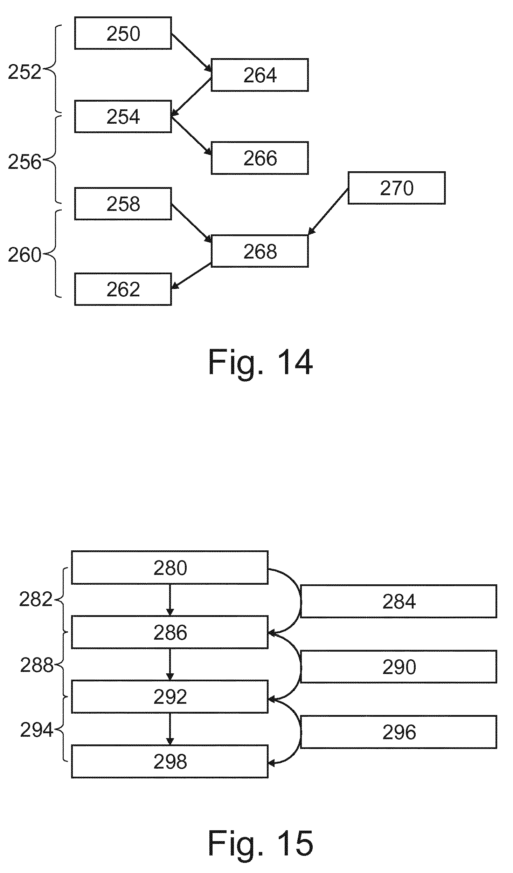

La figure 14 illustre les outils intervenant dans chaque phase du flot de génération de code.

1.3 Projets liés

- « llvm » Low Level Virtual Machine (machine virtuelle de bas niveau) Cet outil est accessible sur le site internet « http://llvm.org ».
- « ccg » C Code Generator (Générateur de code C), décrit dans l'article de I. Piumarta et al, « Ynvm : dynamis compilation in support of software évolution », 2001, est le prédécesseur direct de DeGoal. Mais DeGoal est bien différent :

  - la description de l'architecture a été simplifiée à l'essentiel pour la génération de code machine.
  - le langage source est maintenant un langage d'assemblage de haut niveau.

- « lightning » est un autre outil (qui reprend la description de l'architecture ccg) qui ne permet cependant pas d'utiliser pleinement les registres, les instructions du vecteur ou les instructions multimédia spécifiques. Cet outil est accessible sur le site internet « ».
- « hpbcg » est un ancien outil qui n'était pas portable. Cet outil est accessible sur le site internet « http://hpbcg.org/ ».

2 Création de DeGoal

2.1 Création des outils

L'utilisation en ligne de commande (ici depuis un système de type Unix) se fait de la façon suivante :

```
$ cd src
$ make
```

2.2 Installation des outils

L'utilisation en ligne de commande (ici depuis un système de type Unix) se fait de la façon suivante :

$ make install

2.3 Configuration de l'exécution : options générales

Vous pouvez configurer le comportement d'exécution des programmes fournis dans le répertoire examples à l'aide des variables d'environnement suivantes :

« CDG_DEBUG » Permet d'utiliser l'instruction debug prints et inclut des symboles de débogage (option de compilation -g)

« CDG_DEBUG_VERBOSE » Ajoute des options supplémentaires à l'instruction debug prints. Dans ce mode, les instructions asm qui génèrent le code binaire lors de l'exécution sont incluses en tant que fonctions C et non comme macros C. Cela vous permet de placer un point d'arrêt dans la génération d'une instruction dans votre débogueur préféré.

« CDG_GEN_CHECK » Ajoute des contrôles supplémentaires des instructions générées lors de l'exécution. Vous pouvez par exemple vérifier la taille des opérandes d'une instruction : vous êtes ainsi certain que l'encodage des opérandes n'empiète pas sur le reste de l'encodage des instructions.

Si aucune option de débogage n'est définie, le programme d'exécution est compilé par défaut avec l'option de compilation « -02 » du compilateur.
Ces paramètres d'environnement sont définis dans le fichier « Makefile.conf ».

3 État effectif

3.1 Architectures processeur ciblées

Le tableau suivant résume la compatibilité du logiciel DeGoal avec les architectures processeurs « ARM », « STxP70 » de la société « STMicroelectronics », « PTX » de la société « Nvidia » et le jeu d'instructions « Thumb » pour l'architecture ARM.

| Architecture | Prise en charge |
|---|---|
| Thumb | quasiment complète |
| ARM | quasiment complète |
| STxP70 | prise en charge partielle d'ISA et de FPx ; paquet simple |
| PTX (Nvidia) | basique |

3.2 Plates-formes testées

- STxP70v4 : simulateur fourni avec le kit de développement (SDK), dans les modes ISS (« instruction accurate » en langue anglaise) et CAS (« cycle accurate » en langue anglaise)
- ARM et Thumb : SDK Snowball, Raspberry-Pi
- PTX : Architecture Fermi (Nvidia)

4 Référence du langage de description Isa

L'architecture du jeu d'instructions (ISA, de l'anglais Instruction Set Architecture) est décrite par un fichier contenant toutes les instructions binaires et la syntaxe de leurs niveaux d'assemblage respectifs.

### 4.1 Commentaires

Les commentaires débutent après le signe # jusqu'à la fin de la ligne.

### 4.2 Description

Une ligne spécifique décrit le nom ISA et la longueur de chaque instruction :

Définition : ARCH <arch name> <arch word size|var|txt>

- « arch name » est une chaîne de caractères.
- « <wordlen> » peut être utilisé pour RISC en tant qu'architecture. Il indique la largeur en bits de l'instruction et facilite la génération et la vérification du code.
- « var » décrit un jeu d'instructions de longueur variable (x86 ou xp70)
- « txt » peut être utilisé pour une architecture basée sur une représentation textuelle du code assembleur (GPU NVIDIA).

Exemples :

- ARCH thumb 16 ou ARCH arm 32 pour une architecture RISC
- ARCH x86 var ou ARCH xp70 var
- ARCH ptx txt

### 4.3 Description d'une instruction

Une instruction est décrite par une ligne divisée en deux par une barre « | » : <binary description> | <assembly description>

La partie à gauche de la barre est la description binaire qui doit être générée et la partie à droite de la barre est le niveau d'assemblage utilisé pour le code source.

### 4.3.1 Description binaire

- Nombres binaires, code opération
  Exemple: 0010 1001 11 (Des espaces peuvent être ajoutés pour plus de lisibilité.)

- Description du registre : <reg letter><reg number>_<reg size>
  Exemples :

  « r1_3 » Numéro du registre r1 sur 3 bits
  « r1_3-2 » Numéro du registre r1, bits 2 à 3

- Description d'un entier (integer) : i<int number>_<int end pos>-<int start pos> Exemples :

  « i1_4-0 » : entier i1 bits 0 à 4, i1 doit être utilisé dans la partie en assembleur de l'instruction.
  « (arith expression with i1)_7-0 » : l'expression d'un entier peut être décrite par une expression placée entre parenthèses.

  Exemple : (from cdg-cell.isa)(173 - i1)_7-0 qui produit une valeur de 8 bits composée de 173 moins la valeur de i1 lorsque l'instruction sera générée.

### 4.3.2 Description assembleur

Une instruction assembleur est composée de un mot instruction suivie de plusieurs opérandes séparés par un ou plusieurs caractères d'espacement. Chaque élément de la liste d'opérandes est séparé par des virgules (',')

Exemple :

addi r1, r2, i1

5 Utilisation

L'utilisation en ligne de commande se fait de la façon suivante :

usage: degoaltoc [-h] [--no-line] [-o <file>] -a <arch> file

positional arguments:

file the cdg file to parse

optional arguments:

-h, --help show this help message and exit
--no-line don't add #line in the generated file
-o <file> out file, default: file + .c
-a <arch> targeted architecture

Cette section porte sur la chaîne de compilation pratique à utiliser avec DeGoal. La figure 15 présente le principe et les trois "temps de compilation" différents.

Imaginons qu'un simple programme DeGoal est dans un fichier example.cdg et que nous voulons générer un jeu d'instructions arm tumb. La chaîne de compilation suivra alors ces étapes (d'autres options de compilation ont été supprimées pour plus de simplicité) :

degoaltoc -a thumb -o example.cdg.c example.cdg arm-linux-cc -o example example.cdg.c

./example

1. La première ligne appelle l'outil de réécriture de DeGoal qui réécrira le code en code C compilable.
2. Le compilateur C génère ensuite un fichier exécutable.
3. Enfin, le programme est lancé et le générateur de code inclut dans la compilette va générer un code exécutable en mémoire.

Dans la réalité, nous devons bien sûr utiliser un fichier « makefile ». L'en-tête de ce fichier peut être la suivante :

- SUFFIXES : .cdg
- cdg.c :

degoaltoc -arch=${CDG_ARCH} $< -o $@

S'il utilise ce fichier Makefile, le programmateur ne peut maintenant utiliser que les fichiers suivants :

setenv CDG_ARCH thumb
make example

6 Description de la partie assembleur

La partie assembleur comporte les éléments suivants :

- Mnémonique de l'instruction
- Nom du registre
- Nom de l'entier

6.1 Source de l'assembleur

Toutes les sources DeGoal sont entrelacées dans le code C source. Ce code source ne doit pas être exécuté « en place » comme des déclarations « intrinsic asm », mais il génèrera une instruction assembleur dans la mémoire tampon, instruction qui sera utilisée ultérieurement comme fonction.

Il permet de mélanger un code pseudo-assembleur de haut niveau avec le code C afin de contrôler le flux de génération.

Les blocs DeGoal sont écrits entre un signe ouvrant #[ et un signe fermant #] (ces signes jouent les mêmes rôles que les signes { et } du C).

La section suivante présente le jeu d'instruction de DeGoal.

6.2 Règles de rédaction

Un nom de registre (« ID ») peut être composé de caractères alphanumériques, mais ne doit pas commencer par un chiffre. La règle de décomposition analytique (« parsing » en langue anglaise) est :

ID : [_a-zA-Z][_a-zA-Z0-9]*
Nom du registre : [_a-zA-Z]([_a-zA-Z0-9]*[_a-zA-Z]) ? (ne doit pas se terminer par un chiffre)
Nom du registre indexé : [_a-zA-Z][_a-zA-Z0-9]*[0-9]+ (doit se terminer par un chiffre)

6.3 Description de l'environnement

6.3.1 Begin

```
⟨DeGoal expr⟩ ::= 'Begin' ⟨code Buter⟩ ('Préludé' | 'Leaf' )
 ⟨Code Buffer⟩ ::= ID
```

Le mot-clé « Begin » est utilisé pour indiquer à quel endroit doit commencer la génération d'un code.

Définition : Débute la génération du code. Les paramètres sont les suivants :

• « <CodeBuffer> » est un pointeur C vers la mémoire tampon où le code binaire sera enregistré.
• « Prelude » indique le début d'une fonction, c'est-à-dire le code nécessaire pour gérer la manière dont le début d'une fonction doit être généré (gestion de pile, attribution du registre, etc.).
• « Leaf » indique la mise en mémoire tampon du code sans gestion de pile.

Exemples :

• Begin codeBase Prelude

Cette instruction indique que la compilette sera rédigée dans la mémoire tampon de « codeBase » et que le code du contexte de manipulation sera généré.

6.3.2 Arg

```
⟨DeGoal expr⟩ ::= 'Arg' ⟨Indexed Register Name⟩ (',' ⟨Indexed Register Nane⟩ )*
```

Le mot-clé « Arg » indique l'argument utilisé pour appeler la fonction générée.

Voici quelques exemples :

Définition : Arg <RegList>.
« Reg list » est une liste du registre contenant les paramètres (1 Nous ne prenons pas en compte le paramètre d'appel d'une fonction passant par une pile.).

Exemples :

- « Arg in0 in1 » génèrera une fonction avec des paramètres de 2 arguments si une déclaration « Type in int 32 1 » a auparavant été effectuée.
  Cette déclaration équivaut à une fonction C déclarée de la manière suivante : function(int a, int b)

- « Arg f0 a0 a1 » génèrera une fonction avec des paramètres de 3 arguments si 2 déclarations sont auparavant effectuées :

  « Type a int 32 1 »
  « Type f float 32 1 »

  Cette déclaration équivaut à une fonction C déclarée de la manière suivante : function(float a, int b, int c)

### 6.3.3 End

« End » indique à quel endroit se termine la génération du code et génère la partie finale du code. C'est le traitement du mot clé « End » qui déclenche le nettoyage des mémoires caches d'instructions.

### 6.3.4 Description du registre

```
⟨DeGoal expr⟩ ::= ' Type' ⟨Type name⟩ ⟨arithmetic⟩ ⟨width⟩ ⟨nib elements⟩
⟨DeGoal expr⟩ ::= ' Type' ⟨Type name⟩ 'dyn' ⟨Type descriptor⟩ ⟨nb elements⟩
   (Type name) ::= ID
 (Type descriptor) ::= ID
   ⟨arithmetic⟩ ::= 'integer' | 'int' | 'float' | 'complex'
       ⟨width⟩ ::= INTEGER
  ⟨nb elements⟩ ::= INTEGER
```

Définition :

- « Type » permet de définir des noms de registres virtuels. Le type de données est fixé au nom du registre, ce qui permet de simplifier le jeu d'instructions.
- « Type name » est le nom à définir.
- « arithmetic » est l'arithmétique utilisée. Les arithmétiques actuellement prises en charge sont les suivantes :

  « integer, int » pour l'arithmétique des nombres entiers
  « float » pour l'arithmétique en virgule flottante
  « complex » pour l'arithmétique complexe

- « width » est la taille d'un élément en bits
- « nb elements » correspond au nombre d'éléments dans le vecteur. Ce paramètre est optionnel et vaut 1 s'il est omis.
- « dyn » permet de choisir dynamiquement un type lors de l'exécution dans ce cas.
- « Type description » est la description d'un type C final prédéfini

Exemples :

- « Type i int 48 1 » définit un type de registre nommé i comme un entier scalaire de 48 bits.
- « Type c complex 16 1 » définit un type de données complexes sur 16 bits.
- « C types » : les types suivants redéfinissent les types C intégrés dans DeGoal :

```
char Type char int 8 1
short Type short int 16 1
int Type int int 32 1
long Type long int 64 1
float Type float float 32 1
double Type double float 64 1
```

6.3.5 Alloc

```
⟨DeGoal expr⟩ ::= 'Alloc' ⟨register type⟩ ⟨register name⟩* [ INTEGER | 'MAX' ]
⟨register type⟩ ::= ID
⟨register name⟩ ::= REGISTER_NAME
```

Définition : « Alloc » permet d'attribuer un ensemble de registres indexés à 0.

- « register type » : nom d'un Type précédemment défini.
- « register name » : nom du registre ; notez que le nom ne peut pas se terminer par un chiffre (il doit s'agir d'un caractère ou d'un tiret bas « _ »).
- « number of register » : il existe trois possibilités :

  « integer » : attribue n vecteurs.
  « MAX » : attribue le maximum d'éléments pris en charge par le processeur.
  « None » : attribue un vecteur.

L'accès à un élément du jeu de registres est détaillé dans cette section.

Exemples :

- (a) « Alloc f floatreg 4 » attribue un jeu de 4 registres de type f.
- (b) « Alloc f maxfloatreg MAX » attribue le jeu de registres de type f le plus grand possible.

Si f est défini tel que « Type f float 32 1 », dans (a), on attribue un registre en virgule flottante ; dans (b), on attribue le maximum de registres disponibles pour l'arithmétique en virgule flottante.

6.3.6 Noms de registres spécifiques

Il est possible d'utiliser certains registres spécifiques.
« cdg_clock » est un registre « int 64 1 » contenant le cycle d'horloge.
« cdg_pc » est un registre int 64 1 contenant le compteur du PC.
« cdg_posX », « cdg_posY » et « cdg_posZ » sont des registres « int 32 1 » contenant la position du processeur dans une topologie multiprocesseurs.

6.3.7 Variables globales

Certaines variables globales sont définies dans le contexte C.
cdg_asm_pc est un pointeur vers la prochaine instruction disponible.

6.4 Jeu d'instructions

Une des principales différences entre le langage d'assemblage DeGoal et le langage d'assemblage traditionnel est que le type de données se situe dans les registres et non dans les instructions. Cela permet de représenter les programmes de manière très compacte et offre plus de liberté pour l'optimisation lors de l'exécution.
Si les registres sont des vecteurs, les opérations sont effectuées de manière séquentielle ou en parallèle en fonction du jeu d'instructions de plate-forme sous-jacent.

De manière générale, une instruction est formée de la manière suivante :

```
⟨DeGoal expr⟩ ::= ⟨insu⟩ ⟨register⟩ (',' ⟨register⟩ )*
    ⟨register⟩ ::= INDEXED_REGISTER_NAME
                | REGISTER_NAME ['(' ⟨C r-value⟩ ')' ]
                | '#(' ⟨C r-value⟩ ')'
```

« insn » est le nom de l'instruction. Les instructions disponibles sont listées ci-après.

« register » Un registre doit avoir été défini auparavant par « Alloc » et indexé. Il existe deux manières d'indexer un registre :

- « statically » Le numéro de l'index est ajouté à la fin du nom du registre.
- « dynamically » Le numéro de l'index est exprimé sous forme d'une expression C de la valeur r.

Si aucun index n'est indiqué, le premier élément du registre est utilisé.

Exemples : « reg » est un registre attribué, les expressions suivantes sont valides :

- « reg0 » utilise le premier élément du registre.
- « reg3 » utilise le 4ème élément vecteur du registre.
- « reg » utilise le premier élément du registre (« reg » et « reg0 » sont strictement équivalents)
- « reg(15*myCVar) » utilise le résultat de « 15*myCVar » pour déterminer quel élément du registre utiliser.

Des exemples d'instructions sont listés ci-après :

Addition : « add rdest , rsrc1 , rsrc2 »

Additionnez « rsrc2 » et « rsrc1 » et écrivez le résultat dans « rdest ».

Le résultat est le suivant :

$$\forall i \in \text{Type}, \text{rdest}_i = \text{rsrc1}_i + \text{rsrc2}_i$$

Soustraction : « sub rdest , rsrc1, rsrc2 »

Soustrayez « rsrc2 » à « rsrc1 » et écrivez le résultat dans « rdest ».

Le résultat est le suivant :

$$\forall i \in \text{Type}, \text{rdest}_i = \text{rsrc1}_i - \text{rsrc2}_i$$

Multiplication : « mul rdest , rsrc1 , rsrc2 »

Multipliez « rsrc2 » par « rsrc1 » et écrivez le résultat dans « rdest ».

Le résultat est le suivant :

$$\forall i \in \text{Type}, \text{rdest}_i = \text{rsrc1}_i * \text{rsrc2}_i$$

Division : « div rdest , rsrc1 , rsrc2 »

Divisez « rsrc2 » par « rsrc1 » et écrivez le résultat dans « rdest ».

Le résultat est le suivant :

$$\forall i \in \text{Type}, \text{rdest}_i = \text{rsrc1}_i / \text{rsrc2}_i$$

Multiplication et addition : « ma rdest , rsrc1 , rsrc2 , rsrc3 »

Multipliez et additionnez « rsrc2 » et « rsrc1 » et écrivez le résultat dans « rdest ».

Le résultat est le suivant :

$$\forall i \in Type, rdest = rsrc1i \ast rsrc2i + rsrc3i$$

Raciné carrée : « sq rdest , rsrc1 »
Calculez la racine carrée de « rsrc1 » et écrivez le résultat dans « rdest ».
Le résultat est le suivant :

$$\forall i \in Type, rdesti = \sqrt{rsrc1i}$$

Inverse : « inv rdest , rsrc1 »
Calculez l'inverse de « rsrc1 » et écrivez le résultat dans « rdest ».
Le résultat est le suivant :

$$\forall i \in Type, rdesti = 1 / rscli$$

Somme des différences absolues : « sad rdest , rsrc1 , rsrc2 »
Calculez la somme des différences absolues entre « rsrc2 » et « rsrc1 » et écrivez le résultat dans « rdest » .
Le résultat est le suivant :

$$r_{dest} = \sum_{i \; in \; VectorType}^{n} abs(r_{src1_i} - r_{src2_i})$$

Remarque : « rdest » doit être un registre scalaire suffisamment important pour contenir les valeurs accumulées.
Multiplication de matrice et addition : « mma rdest , rsrc1 , rsrc2 »
Multipliez la matrice entre « rsrc2 » et « rsrc1 » et écrivez le résultat dans « rdest ». Le résultat est le suivant :

$$r_{dest} = \sum_{i \; in \; VectorType}^{n} r_{src1_i} \ast r_{src2_i}$$

Remarque : « rdest » doit être un registre scalaire suffisamment important pour contenir les valeurs accumulées.
Chargement : « ld rdest , [rbase [, #offset[, #stride]] »
Chargez les valeurs dans le registre rdest (qui peut être un vecteur de registre) à partir de la mémoire

- rbase est l'adresse de base des valeurs.
- #offset est le décalage (valeur par défaut = 0).
- #stride est la distance entre deux éléments (valeur par défaut = 1).
- La taille des données est implicite et donnée par « Type » (en octets).

Le résultat est le suivant :

$$\forall i \in Type, rdesti = memory(rbase + of\!f set + i \times stride \times DataWidth$$

Enregistrement : « st [rbase [, #offset[, #stride]], rsrc »
Enregistrez dans la mémoire les valeurs du registre « rsrc» (qui peut être un vecteur de registre).

- rbase est l'adresse de base des valeurs.
- #offset est le décalage (valeur par défaut = 0).
- #stride est la distance entre deux éléments (valeur par défaut = 1).
- La taille des données est implicite et donnée par « Type » (en octets).

Le résultat est le suivant :

$$\forall i \in Type, memory(rbase + offset + i \times stride \times DataWidth = rsrc_i$$

Etiquettes :
Une étiquette est définie par un mot clé seul en début de ligne suivi du caractère ':' Exemple :

```
label_def:
```

Saut
Jump « label »
L'instruction « Jump » génère une instruction de saut à l'adresse mémoire définie par l'étiquette « label ».
Appel de fonction
Call « label »
L'instruction « call » génère une appel à la routine se trouvant à l'adresse mémoire définie par l'étiquette « label ».

7 Exemples

Les exemples suivants sont présentés comme des tutoriels afin d'expliquer les fonctions de DeGoal. Ces exemples sont écrits en langage C.

7.1 Simple multiplication

« Simple multiplication » est un exemple très simple. Cette compilette génère un code qui multiplie la valeur du paramètre par une « constante » qui est uniquement connue lors de l'exécution.

```
1 #include <stdio.h> / * -*- C -*- */
2 #include <stdlib.h>
3 typedef int (*pifi)(int) ;
4
5 /* Compilette qui multiplie une valeur constante *l
6 pifi multiplyCompile(int multiplyValue)
7 {
8 cdglnsnT *code= CDGALLOC(1024) ;
9 PRINT_DEBUG(« Code generation for multiply value %d code at%p\n », multi
10 #[
11 Begin code Prelude inputalias
12
13 mul out, inputalias, #(multiplyValue)
14
15 rtn
16 End
17 ]# ;
18 return (pifi)code ;
```

7.2 Compilette RPN

Cet exemple est plus compliqué car il génère un code pour un RPN (Reverse Polish Notation, notation suffixée). Dans cet exemple, le code est utilisé pour générer deux fonctions qui convertissent les nombres en degrés Celsius en nombres en degrés Fahrenheit.
Dans cet exemple, il est intéressant d'utiliser un jeu de registres comme pile pour l'évaluation RPN.
Étudiez le programme « main.c » correspondant pour comprendre l'évaluation des performances basiques.

```
1 #include <stdio.h> / * -*- C -*- */
2 #include <stdlib.h>
3
4 typedef int ( * pifi ) ( int ) ; /* Pointeur vers la définition de la fonction */
5
```

```
/*
* Compilette RPN : transformer une expression RPN en code binaire
*/

pifi rpnCompile(char *expr)
{
cdglnsnT *codeBuffer=CDGALLOC(64) ;
int Top ;
#[
Type scalarlnt int 32 1
Alloc scalar Int a 10

Begin code Buffer Prelude a0
]# ;

Top=0 ;
while(*expr )
{
char buf[3 2 ] ;
int n ;
if (sscanf ( expr, "%[0-9]%n" , buf, &n))
{
expr += n - 1 ;
if (Top == 10 )
{
fprintf( stderr, "expression too complex" ) ;
exit(0) ;
}
++Top;
#[ mv a( Top ), #( atoi(buf)) ] # ;
}
else
switch(*expr)
{
case '+' : --Top; #[ add a(Top), a(Top), a(Top+1) ]# break ;
case '-' : --Top; #[ sub a(Top), a(Top), a(Top+1) ]# break;
case '*' : --Top ; #[ mul a(Top), a(Top), a(Top+1) ]# break ;
case '/' : --Top; #[ div a(Top), a(Top), a(Top+1) ]# break;
default :
fprintf(stderr, " cannot compile : %s n " \, expr ) ;
abort() ;
}
++expr;
}
if ( 0 != Top )
{
fprintf(stderr, "stack error \n" ) ; abort() ;
}
#[ rtn
End
] # ;

if ((int)(cdg asm pc - codeBuffer ) >= 64 )
{
fprintf(stderr, "expression too complex (not enough memory)") ; abort() ;
}
return(pifi)codeBuffer ;
}
```

7.3 Multiplication Vecteur x constante

```
#include <stdio.h> / * -*- C -*- */
#include <stdlib.h>
typedef int* (*pifi)(*int) ;

/* Compilette qui multiplie un vecteur par une valeur constante *l
pifi multiplyCompile(int multiplyValue, size_t vector_length)
{
cdgInsnT *code= CDGALLOC(1024) ;
PRINT_DEBUG(« Code generation for multiply value %d code at%p\n », multi
#[
Begin code Prelude inputalias
Type vectorType int 32 #(vector_length)
Alloc vectorType v
Lw v, inputalias
Mul v, v, #(multiplyValue)
Sw out, v

rtn
End
]# ;
return (pifi)code ;
```

## 7.6 Mandelbrot

Cet exemple génère une fonction qui calcule un pixel en un ensemble de Mandelbrot.

```
#include <stdio.h> / * -*- C -*- */
#include <stdlib.h>

typedef int (*pifdd) (tComplex *a) ;

tComplex ConstZero = { 0.0 f , 0.0 f } ;


pifdd isInSetCompile(int limit)
{
insn * myFunction= (insn *)calloc(64, sizeof(insn)) ;
insn * boucle, *exit ;

/ * Prototype de la fonction
* Calculez le nombre d'itérations de divergence de la fonction.
* isInSet (tComplex point)
*/
#[
Begin
FunctionAddress myFunction

RegisterType c complex 32 1
RegisterType i int32 1
RegisterType f int32 1
RegisterWindow 1 2 0

Id c1, in1
clr c2
clr i1
boucle :
add i1, i1, 1
cmp i1, (limit)
binf exit

mul c2, c2, c2
add c2, c2, c1
```

```
37 mul f0 , c2.r, c2.r
38 mul f1, c2.i, c2.i
39 add f0, f0, f1
40 cmp f0, fmodule
41 binf exit
42
43 jump boucle
44 exit :
45 rtn
46 End
47 ] # ;
48 return (pifdd) myFunction ;
49 }
```

## 9 Signalement d'un bug

Veuillez envoyer vos commentaires à l'adresse « henri-pierre.charles@cea.fr ».

## 10 Légende des figures

Tableau de correspondance des références de la figure 12.

| 204 | Description algorithme |
|-----|------------------------|
| 206 | Source C |
| 208 | Source C + cdg |
| 210 | Source C |
| 212 | Binaire statique |
| 214 | Binaire dynamique |
| 216 | Code efficace & exécutable |
| 218 | Programmeur |
| 220 | Écrit à la main |
| 222 | CDG |
| 224 | Compilateur |
| 226 | Système d'exploitation |
| 228 | Compilette |
| 230 | Langage de programmation |
| 232 | Fonction candidat + Options |
| 234 | Architecture + Profil |
| 236 | Modifications optimisation |
| 238 | Caractéristiques du jeu de données |

Tableau de correspondance des références de la figure 13.

| 240 | Description de l'architecture réelle |
|-----|--------------------------------------|
| 242 | Génération du code polyvalent |
| 246 | Instructions macro, Version C, Analyseur statique .../... |

## EP 2 860 656 B1

Tableau de correspondance des références de la figure 14.

| 250 | Source C + cdg, Asm, (Langage Asm de haut niveau) |
|---|---|
| 252 | « Réécriture » |
| 254 | Source C |
| 256 | « Compilation statique » |
| 258 | Binaire statique |
| 260 | « Exécution » |
| 262 | Binaire exécution |
| 264 | Paramètre de vectorisation, Réécriture CDG, Adaptation cible |
| 266 | Compilateur C |
| 268 | Compilette, Adaptation données |
| 270 | Paramètres exécution/dynamiques : <br> - Valeurs de données <br> - Métadonnées (banque mémoire, alignements) <br> - Profil énergétique <br> - Température |

Tableau de correspondance des références de la figure 15.

| 280 | Fichier source : Example.cdg |
|---|---|
| 282 | Réécriture |
| 284 | degoaltoc |
| 286 | Fichier source : Example.cdg.c |
| 288 | Compilation statique |
| 290 | Compilateur C (gcc, clang, etc.) |
| 292 | Fichier exécutable : Example |
| 294 | Exécution |
| 296 | Compilette |
| 298 | Mémoire tampon exécutable : code généré |

**Revendications**

1. Procédé d'exécution (80) par un microprocesseur d'un code binaire polymorphique (20) d'une pluralité de fonctions prédéterminées, ce procédé comportant :

   • la fourniture d'un microprocesseur (2) équipé d'une ou plusieurs unités arithmétiques et logiques (4) et d'une mémoire (8) configurée pour stocker des instructions devant être exécutées par ladite une ou plusieurs unités arithmétiques et logiques dans l'ordre où ces instructions doivent être exécutées ;
   • l'acquisition (90) du code binaire polymorphique (20) d'une pluralité de fonctions prédéterminées, ce code binaire polymorphique comportant, pour chacune des fonctions prédéterminées :

      • un bloc d'instructions (22) apte à acquérir un aléa numérique lorsqu'il est exécuté par le microprocesseur ;
      • un bloc d'instructions (24), appelé « générateur spécifique », apte à générer, lorsqu'il est exécuté par le microprocesseur, un ensemble d'instructions cibles, cet ensemble d'instructions cibles générées réalisant ladite fonction prédéterminée lorsqu'il est lui-même exécuté par le microprocesseur,

• des instructions de contrôle (26) aptes à placer à l'intérieur de la mémoire l'ensemble d'instructions cibles générées par le générateur lorsque ces instructions de contrôle sont exécutées par le microprocesseur ;

et dans lequel :

• chaque instruction est constituée d'un opcode codant la nature de l'opération à exécuter et d'un ou plusieurs opérandes définissant la ou les valeurs des paramètres de cette opération ;
• le générateur spécifique incorpore :

• une pluralité de variantes de codage (28) de la fonction prédéterminée, chaque variante de codage générant, lorsqu'elle est exécutée par le microprocesseur, un ensemble spécifique d'instructions réalisant la fonction prédéterminée, chaque ensemble spécifique d'instructions se distinguant les uns des autres par au moins un opcode d'instructions et/ou un opérande différent et/ou une valeur littérale différente et/ou un nombre d'instructions différent, et
• des instructions de sélection (30) permettant de choisir, lors de l'exécution du générateur par le microprocesseur, parmi ladite pluralité de variantes de codage disponibles, en fonction d'un aléa numérique, la variante de codage à exécuter pour générer l'ensemble d'instructions cibles ;

• l'acquisition (92) d'un aléa numérique, par l'exécution par le microprocesseur du bloc d'instructions (22) apte à acquérir l'aléa numérique ;
• le choix (94) d'une variante de codage à exécuter, par l'exécution par le microprocesseur des instructions de sélection, ce choix étant réalisé en fonction de l'aléa numérique acquis ; le choix de la variante de codage à exécuter étant systématiquement réalisé uniquement entre les différentes variantes de codage de la même dite fonction prédéterminée, de sorte que le générateur spécifique soit dépourvu d'instructions de sélection permettant de choisir des variantes de codage d'une autre fonction que ladite fonction prédéterminée ;
• la génération (96), par l'exécution par le microprocesseur du générateur spécifique, de l'ensemble d'instructions cibles en exécutant la variante de codage choisie en fonction de l'aléa numérique ;
• le déplacement (98) dans la mémoire du microprocesseur, par l'exécution par le microprocesseur des instructions de contrôle, de l'ensemble d'instructions cibles généré pour que le microprocesseur exécute ces instructions cible ;
• l'exécution (100) de l'ensemble d'instructions cibles par le microprocesseur.

2. Procédé selon la revendication 1, dans lequel l'aléa numérique est un nombre aléatoire ou pseudo-aléatoire.

3. Procédé d'exécution d'un code binaire d'une primitive cryptographique par un microprocesseur, **caractérisé en ce que** ce procédé comporte l'exécution par un microprocesseur d'un code binaire polymorphique d'une pluralité de fonctions prédéfinies implémentant au moins une partie de cette primitive cryptographique, cette exécution étant réalisée conformément à l'une quelconque des revendications précédentes.

4. Code binaire polymorphique (20) d'une pluralité de fonctions prédéterminées, ce code binaire étant directement exécutable par un microprocesseur équipé :

• d'une ou plusieurs unités arithmétiques et logiques, et
• d'une mémoire dans laquelle sont enregistrées des instructions devant être exécutées par ladite une ou plusieurs unités arithmétiques et logiques dans l'ordre où ces instructions doivent être exécutées ;

chaque instruction étant constituée d'un opcode codant la nature de l'opération à exécuter et d'un ou plusieurs opérandes définissant la ou les valeurs des paramètres de cette opération ;
ce code binaire polymorphique comportant en outre pour chacune des fonctions prédéterminées :

• un bloc d'instructions apte à acquérir un aléa numérique lorsqu'il est exécuté par le microprocesseur ;
• un bloc d'instructions, appelé « générateur spécifique », apte à générer, lorsqu'il est exécuté par le microprocesseur, un ensemble d'instructions cibles, cet ensemble d'instructions cibles généré réalisant ladite fonction prédéterminée lorsqu'il est lui-même exécuté par le microprocesseur,
• des instructions de contrôle aptes à placer à l'intérieur de la mémoire l'ensemble d'instructions cibles généré par le générateur spécifique lorsque ces instructions de contrôle sont exécutées par le microprocesseur ;

le générateur spécifique incorporant :

• une pluralité de variantes de codage de la fonction prédéterminée, chaque variante de codage générant, lorsqu'elle est exécutée par le microprocesseur, un ensemble spécifique d'instructions cibles réalisant la fonction prédéterminée, chaque ensemble spécifique d'instructions se distinguant les uns des autres par au moins un opcode d'instructions et/ou un opérande différent et/ou une valeur littérale différente et/ou un nombre d'instructions différent, et

• des instructions de sélection permettant de choisir, lors de l'exécution du générateur spécifique par le microprocesseur, parmi ladite pluralité de variantes de codage disponibles, en fonction de l'aléa numérique, la variante de codage à exécuter pour générer l'ensemble d'instructions cibles ;le générateur spécifique comportant uniquement des instructions de sélection permettant de choisir uniquement des variantes de codage de ladite fonction prédéterminée de sorte que le générateur spécifique soit dépourvu d'instructions de sélection permettant de choisir des variantes de codage d'une autre fonction que ladite fonction prédéterminée.

5. Code binaire selon la revendication 4, dans lequel au moins l'une des variantes de codage à exécuter comporte un opérande dont la valeur est fonction du même ou d'un autre aléa numérique de manière à ce que l'ensemble spécifique d'instructions cibles généré par l'exécution de cette variante de codage varie en fonction de cet aléa numérique.

6. Code binaire selon les revendications 4 ou 5, dans lequel les instructions de contrôle sont aptes à modifier, en fonction de l'aléa numérique ou d'un autre aléa numérique, l'ordre dans la mémoire d'au moins deux instructions de l'ensemble d'instructions cibles généré par le générateur spécifique.

7. Code binaire selon l'une quelconque des revendications 4 à 6, dans lequel :

- au moins une variante de codage comporte une instruction dont l'opérande correspond à un identifiant d'un registre mémoire du microprocesseur, et
- le code binaire comporte des instructions aptes à modifier la valeur de cet opérande en fonction du même ou d'un autre aléa numérique de manière à modifier l'affectation des registres du microprocesseur à chaque modification de cet aléa numérique.

8. Code binaire selon l'une quelconque des revendications 4 à 7, dans lequel :

- la fonction prédéterminée traite une donnée dont la valeur est uniquement connue au moment de l'exécution de cette fonction prédéterminée par le microprocesseur, et
- le générateur spécifique est apte à générer un ensemble d'instructions spécifiques réalisant cette fonction et dans lequel la valeur de la donnée est directement et uniquement contenue dans les opérandes de ces instructions spécifiques et non pas dans un registre.

9. Support d'enregistrement d'informations (16), **caractérisé en ce qu'**il comporte un code binaire polymorphique exécutable conforme à l'une quelconque des revendications 4 à 8.

10. Procédé de construction d'un code binaire polymorphique pour l'exécution d'une fonction prédéterminée, **caractérisé en ce qu'**il comporte :

- l'acquisition (50) d'un code source de la fonction prédéterminée à exécuter ;
- la compilation (70), par un compilateur, du code source acquis pour former le code binaire polymorphique exécutable conforme à l'une quelconque des revendications 4 à 8.

**Patentansprüche**

1. Verfahren zur Ausführung (80) durch einen Mikroprozessor eines polymorphen Binärcodes (20) einer Vielzahl von zuvor bestimmten Funktionen, wobei das Verfahren Folgendes umfasst:

• die Bereitstellung eines Mikroprozessors (2), der mit einer oder mehreren logischen Recheneinheiten (4) und einem Speicher (8) ausgerüstet ist, der dazu ausgestaltet ist, Anweisungen zu speichern, die durch die eine oder mehrere logische Recheneinheit(en) in der Reihenfolge ausgeführt werden sollen, in welcher diese Anweisungen ausgeführt werden müssen;
• die Erfassung (90) des polymorphen Binärcodes (20) einer Vielzahl von zuvor bestimmten Funktionen, wobei dieser polymorphe Binärcode für jede der zuvor bestimmten Funktionen Folgendes aufweist:

- einen Anweisungsblock (22), der dazu geeignet ist, eine numerische Zufälligkeit zu erfassen, wenn er durch den Mikroprozessor ausgeführt wird;
- einen Anweisungsblock (24), der "spezieller Generator" genannt wird, der dazu geeignet ist, wenn er durch den Mikroprozessor ausgeführt wird, eine Gesamtheit von Zielanweisungen zu erzeugen, wobei diese Gesamtheit von erzeugten Zielanweisungen die zuvor bestimmte Funktion realisiert, wenn sie selbst durch den Mikroprozessor ausgeführt wird,
- Kontrollanweisungen (26), die dazu geeignet sind, die Gesamtheit von Zielanweisungen, die durch den Generator erzeugt wurden, in den Speicher zu platzieren, wenn diese Kontrollanweisungen durch den Mikroprozessor ausgeführt werden;

und wobei:

- jede Anweisung aus einem Opcode besteht, mit dem die Art der auszuführenden Operation und ein oder mehrere Operanden codiert werden, welche den oder die Wert(e) der Parameter dieser Operation definieren;
- der spezielle Generator einschließt:

  - eine Vielzahl von Codierungsvarianten (28) der zuvor bestimmten Funktion, wobei jede Codierungsvariante, wenn sie durch den Mikroprozessor ausgeführt wird, eine spezielle Gesamtheit von Anweisungen erzeugt, mit denen die zuvor bestimmte Funktion realisiert wird, wobei sich jede spezielle Gesamtheit von Anweisungen voneinander durch mindestens einen Opcode von Anweisungen und/oder einen unterschiedlichen Operanden und/oder einen unterschiedlichen Literalwert und/oder eine unterschiedliche Anzahl an Anweisungen unterscheidet, und
  - Auswahlanweisungen (30), die es ermöglichen, während der Ausführung des Generators durch den Mikroprozessor, unter dieser Vielzahl von verfügbaren Codierungsvarianten in Abhängigkeit von einer numerischen Zufälligkeit die auszuführende Codierungsvariante auszuwählen, um die Gesamtheit von Zielanweisungen zu erzeugen;

- die Erfassung (92) einer numerischen Zufälligkeit durch Ausführung durch den Mikroprozessor des Anweisungsblocks (22), der dazu geeignet ist, die numerische Zufälligkeit zu erfassen;
- die Auswahl (94) einer auszuführenden Codierungsvariante, durch Ausführung durch den Mikroprozessor derAuswahlanweisungen, wobei diese Auswahl in Abhängigkeit von der erfassten numerischen Zufälligkeit erfolgt; wobei die Auswahl der auszuführenden Codierungsvariante nur unter den unterschiedlichen Codierungsvarianten derselben genannten zuvor bestimmten Funktion systematisch dergestalt erfolgt, dass der spezielle Generator frei von Auswahlanweisungen ist, die es ermöglichen, Codierungsvarianten einer anderen Funktion als die zuvor bestimmte Funktion auszuwählen;
- die Erzeugung (96) durch Ausführung durch den Mikroprozessor des speziellen Generators der Gesamtheit von Zielanweisungen, indem die in Abhängigkeit von der numerischen Zufälligkeit gewählte Codierungsvariante ausgeführt wird;
- die Verschiebung (98) in dem Speicher des Mikroprozessors, durch Ausführung durch den Mikroprozessor der Kontrollanweisungen, der Gesamtheit von Zielanweisungen, die erzeugt wird, damit der Mikroprozessor diese Zielanweisungen ausführt;
- Ausführung (100) der Gesamtheit von Zielanweisungen durch den Mikroprozessor.

2. Verfahren nach Anspruch 1, wobei die numerische Zufälligkeit aus einer Zufallszahl oder Pseudozufallszahl besteht.

3. Verfahren zur Ausführung eines Binärcodes eines kryptografischen Primitivs durch einen Mikroprozessor, **dadurch gekennzeichnet, dass** dieses Verfahren die Ausführung durch einen Mikroprozessor eines polymorphen Binärcodes einer Vielzahl von zuvor definierten Funktionen umfasst, mit denen mindestens ein Teil dieses kryptografischen Primitivs implementiert wird, wobei diese Ausführung gemäß irgendeinem der vorhergehenden Ansprüche erfolgt.

4. Polymorpher Binärcode (20) einer Vielzahl von zuvor bestimmten Funktionen, wobei dieser Binärcode direkt durch einen Mikroprozessor ausführbar ist, der ausgerüstet ist mit:

- einer oder mehreren logischen Recheneinheiten, und
- einem Speicher, in welchem die Anweisungen gespeichert sind, die durch die eine oder mehrere logische Recheneinheit(en) in der Reihenfolge ausgeführt werden sollen, in welcher diese Anweisungen ausgeführt werden müssen;

wobei jede Anweisung aus einem Opcode, mit dem die Art der auszuführenden Operation codiert wird, und aus einem oder mehreren Operanden besteht, welche den oder die Wert(e) der Parameter dieser Operation definieren; wobei dieser polymorphe Binärcode außerdem für jede der zuvor bestimmten Funktionen Folgendes umfasst:

• einen Anweisungsblock, der dazu geeignet ist, eine numerische Zufälligkeit zu erfassen, wenn er durch den Mikroprozessor ausgeführt wird;
• einen Anweisungsblock, der "spezieller Generator" genannt wird, der dazu geeignet ist, wenn er durch den Mikroprozessor ausgeführt wird, eine Gesamtheit von Zielanweisungen zu erzeugen, wobei diese erzeugte Gesamtheit von Zielanweisungen die zuvor bestimmte Funktion realisiert, wenn sie selbst durch den Mikroprozessor ausgeführt wird,
• Kontrollanweisungen, die dazu geeignet sind, die Gesamtheit von Zielanweisungen, die durch den speziellen Generator erzeugt wurden, in den Speicher zu platzieren, wenn diese Kontrollanweisungen durch den Mikroprozessor ausgeführt werden;

wobei der spezielle Generator einschließt:

• eine Vielzahl von Codierungsvarianten der zuvor bestimmten Funktion, wobei jede Codierungsvariante, wenn sie durch den Mikroprozessor ausgeführt wird, eine spezielle Gesamtheit von Zielanweisungen erzeugt, mit denen die zuvor bestimmte Funktion realisiert wird, wobei sich jede spezielle Gesamtheit von Anweisungen voneinander durch mindestens einen Opcode von Anweisungen und/oder einen unterschiedlichen Operanden und/oder einen unterschiedlichen Literalwert und/oder eine unterschiedliche Anzahl an Anweisungen unterscheidet, und
• die Auswahlanweisungen, welche es ermöglichen, während der Ausführung des speziellen Generators durch den Mikroprozessor, unter der Vielzahl von verfügbaren Codierungsvarianten in Abhängigkeit von der numerischen Zufälligkeit die auszuführende Codierungsvariante auszuwählen, um die Gesamtheit von Zielanweisungen zu erzeugen; wobei der spezielle Generator nur die Auswahlanweisungen umfasst, die es ermöglichen, nur die Codierungsvarianten der zuvor bestimmten Funktion dergestalt auszuwählen, dass der spezielle Generator frei von Auswahlanweisungen ist, die es ermöglichen, Codierungsvarianten einer anderen Funktion auszuwählen, als die zuvor bestimmte Funktion.

5. Binärcode nach Anspruch 4, wobei mindestens eine der auszuführenden Codierungsvarianten einen Operanden umfasst, dessen Wert eine Funktion derselben oder einer anderen numerischen Zufälligkeit dergestalt ist, dass die spezielle Gesamtheit von Zielanweisungen, die durch die Ausführung dieser Codierungsvariante erzeugt wird, in Abhängigkeit von dieser numerischen Zufälligkeit variiert.

6. Binärcode nach den Ansprüchen 4 oder 5, wobei die Kontrollanweisungen dazu geeignet sind, in Abhängigkeit von der numerischen Zufälligkeit oder einer anderen numerischen Zufälligkeit, die Reihenfolge in dem Speicher von mindestens zwei Anweisungen der Gesamtheit von Zielanweisungen zu modifizieren, die durch den speziellen Generator erzeugt wird.

7. Binärcode nach irgendeinem der Ansprüche 4 bis 6, wobei:

- mindestens eine Codierungsvariante eine Anweisung umfasst, deren Operand einer Kennzeichnung eines Speicherregisters des Mikroprozessors entspricht, und
- der Binärcode Anweisungen umfasst, die dazu geeignet sind, den Wert dieses Operanden in Abhängigkeit von derselben oder einer anderen numerischen Zufälligkeit dergestalt zu modifizieren, dass die Zuweisung der Register des Mikroprozessors bei jeder Modifikation dieser numerischen Zufälligkeit modifiziert wird.

8. Binärcode nach irgendeinem der Ansprüche 4 bis 7, wobei:

- die zuvor bestimmte Funktion Daten behandelt, deren Wert nur in dem Moment der Ausführung dieser zuvor bestimmten Funktion durch den Mikroprozessor bekannt ist, und
- der spezielle Generator dazu geeignet ist, eine Gesamtheit von speziellen Anweisungen zu erzeugen, mit denen diese Funktion realisiert wird, und wobei der Wert der Daten direkt und einzig in den Operanden dieser speziellen Anweisungen und nicht in einem Register enthalten ist.

9. Aufzeichnungsträger von Informationen (16), **dadurch gekennzeichnet, dass** er einen polymorphen Binärcode umfasst, der gemäß irgendeinem der Ansprüche 4 bis 8 ausgeführt werden kann.

10. Herstellungsverfahren eines polymorphen Binärcodes zur Ausführung einer zuvor bestimmten Funktion, **dadurch gekennzeichnet, dass** es Folgendes umfasst:

- die Erfassung (50) eines Quellcodes der auszuführenden zuvor bestimmten Funktion;
- die Kompilation (70), durch einen Kompilator, des Quellcodes, der erfasst wird, um den polymorphen Binärcode auszubilden, der gemäß irgendeinem der Ansprüche 4 bis 8 ausgeführt werden kann.

**Claims**

1. Method of executing (80), by a microprocessor, a polymorphic binary code (20) of a plurality of predetermined functions, this method comprising:

• the provision of a microprocessor (2) equipped with one or more arithmetic and logic units (4) and a memory (8) configured to store instructions that have to be executed by said one or several arithmetic and logic units in the order in which these instructions have to be executed;
• the acquisition (90) of the polymorphic binary code (20) of a plurality of predetermined functions, this polymorphic binary code comprising, for each of the predetermined functions:

• a block of instructions (22) suitable for acquiring a random number when it is executed by the microprocessor;
• a block of instructions (24), called "specific generator", suitable for generating, when it is executed by the microprocessor, a set of target instructions, this set of generated target instructions performing said predetermined function when it is itself executed by the microprocessor,
• control instructions (26) suitable for placing in the memory the set of target instructions generated by the generator when these control instructions are executed by the microprocessor;

and in which:

• each instruction consists of an opcode coding the nature of the operation to be executed and one or more operands defining the value or values of the parameters of this operation;
• the specific generator incorporates:

• a plurality of coding variants (28) of the predetermined function, each coding variant generating, when it is executed by the microprocessor, a specific set of instructions performing the predetermined function, each specific set of instructions being distinguished from one another by at least one instruction opcode and/or one different operand and/or a different literal value and/or a different number of instructions, and
• selection instructions (30) making it possible to choose, during the execution of the generator by the microprocessor, from said plurality of available coding variants, as a function of a random number, the coding variant to be executed to generate the set of target instructions;

• the acquisition (92) of a random number, through the execution by the microprocessor of the block of instructions (22) suitable for acquiring the random number;
• the choice (94) of a coding variant to be executed, through the execution by the microprocessor of the selection instructions, this choice being made as a function of the acquired random number; the choice of the coding variant to be executed being systematically made only between the different coding variants of the same said predetermined function such that the specific generator has no selection instructions that make it possible to choose coding variants of a function other than said predetermined function;
• the generation (96), through the execution by the microprocessor of the specific generator, of the set of target instructions by executing the coding variant chosen as a function of the random number;
• the shifting (98) in the memory of the microprocessor, through the execution by the microprocessor of the control instructions, of the set of target instructions generated for the microprocessor to execute these target instructions;
• the execution (100) of the set of target instructions by the microprocessor.

2. Method according to Claim 1, in which the random number is a random or pseudo-random number.

3. Method of executing a binary code of a cryptographic primitive by a microprocessor, **characterized in that** this method comprises the execution by a microprocessor of a polymorphic binary code of a plurality of predefined functions implementing at least part of this cryptographic primitive, this execution being performed in accordance with any one of the preceding claims.

4. Polymorphic binary code (20) of a plurality of predetermined functions, this binary code being directly executable by a microprocessor equipped:

   • with one or more arithmetic and logic units, and
   • with a memory in which instructions are stored that have to be executed by said one or more arithmetic and logic units in the order in which these instructions have to be executed;

   each instruction consisting of an opcode coding the nature of the operation to be executed and one or more operands defining the value or values of the parameters of this operation;
   this polymorphic binary code further comprising, for each of the predetermined functions:

   • a block of instructions suitable for acquiring a random number when it is executed by the microprocessor;
   • a block of instructions, called "specific generator", suitable for generating, when it is executed by the microprocessor, a set of target instructions, this set of target instructions generated performing said predetermined function when it is itself executed by the microprocessor,
   • control instructions suitable for placing in the memory the set of target instructions generated by the specific generator when these control instructions are executed by the microprocessor;

   the specific generator incorporating:

   • a plurality of coding variants of the predetermined function, each coding variant generating, when it is executed by the microprocessor, a specific set of target instructions performing the predetermined function, each specific set of instructions being distinguished from one another by at least one instruction opcode and/or one different operand and/or one different literal value and/or one different number of instructions, and
   • selection instructions that make it possible to choose, during the execution of the specific generator by the microprocessor, from said plurality of available coding variants, as a function of the random number, the coding variant to be executed to generate the set of target instructions; the specific generator comprising only selection instructions that make it possible to choose only coding variants of said predetermined function such that the specific generator has no selection instructions that make it possible to choose coding variants of a function other than said predetermined function.

5. Binary code according to Claim 4, in which at least one of the coding variants to be executed comprises an operand whose value is a function of the same or of another random number such that the specific set of target instructions generated by the execution of this coding variant varies as a function of this random number.

6. Binary code according to Claim 4 or 5, in which the control instructions are suitable for modifying, as a function of the random number or of another random number, the order in the memory of at least two instructions of the set of target instructions generated by the specific generator.

7. Binary code according to any one of Claims 4 to 6, in which:

   - at least one coding variant comprises an instruction whose operand corresponds to an identifier of a memory register of the microprocessor, and
   - the binary code comprises instructions suitable for modifying the value of this operand as a function of the same or of another random number so as to modify the assignment of the registers of the microprocessor each time this random number is modified.

8. Binary code according to any one of Claims 4 to 7, in which:

   - the predetermined function processes a datum whose value is only known at the time of the execution of this predetermined function by the microprocessor, and

- the specific generator is suitable for generating a set of specific instructions performing this function and in which the value of the datum is directly and only contained in the operands of these specific instructions and not in a register.

9. Information storage medium (16), **characterized in that** it comprises an executable polymorphic binary code conforming to any one of Claims 4 to 8.

10. Method for constructing a polymorphic binary code for the execution of a predetermined function, **characterized in that** it comprises:

- the acquisition (50) of a source code of the predetermined function to be executed;
- the compilation (70), by a compiler, of the acquired source code to form the executable polymorphic binary code conforming to any one of Claims 4 to 8.

Fig. 1

Fig. 2

Fig. 3

```
MOV A, ASM_input + 0    ;  load a0
XRL A, ASM_key + 0      ;  add  k0

MOVC A, @A + DPTR       ;  substitute  a0
MOV ASM_input, A        ;  store  a0

MOV A, ASM_input + 4    ;  load  a4
XRL A, ASM_key + 4      ;  add  k4

MOVC A, @A + DPTR       ;  substitute  a4
MOV ASM_input + 4, A    ;  store  a4

MOV A, ASM_input + 8    ;  load  a8
XRL A, ASM_key + 8      ;  add  k8

MOVC A, @A + DPTR       ;  substitute  a8
MOV ASM_input + 8, A    ;  store  a8

MOV A, ASM_input + 12   ; load a12
XRL A, ASM_key + 12     ; add k12

MOVC A, @A + DPTR       ; substitute a12
MOV ASM_input + 12, A   ; store a12
```

54
52

# Fig. 4

```
void compilette(cdgInsnT* code) {
   #[
Begin code Prelude ASM_input , ASM_key, DPTR
Type uint32_t int 32
Alloc uint32_t A

lw A, @(#(ASM_input + 0)) // load a0
add A, #(ASM_key + 0)     // add k0

mv A, @(A + #(DPTR))      // substitute a0
lw  @(#(ASM_input)), A    // store a0

   End
   ]#
}
```

56

# Fig. 5

```
#include <cdg-msp430.h>

void compilette(cdgInsnT* code)  {
CDGBEGIN(code);
CDGArg(3);
CDGStopParamState();
cdgRegDescrT A = CDGAlloc_r();
CDGgenlw_rii(A,(ASM_input) , (0));
CDGgenadd_ri(A,(ASM_key + 0));
CDGgenlw_rri(A,A, (DPTR));
CDGgensw_iir((ASM_input) , (0) , A);
CDGEND();
}
```

64
62

# Fig. 6

```c
# include <stdlib.h>
# define ALEA_SEED 0xABDE1234

void  CDGgenadd_ri(cdgRegDescrT rdest, unsigned int immediateVal)
{
srand (ALEA_SEED);
 int alea = rand ();

    if (isEven(alea)) {
            // rdest  := rdest + immediateVal
            scheduleInstruction(add_ri, rdest, immediateVal);
    }
    else  {
            int k = rand() & 0xFFFF;
            cdgRegDescrT rtmp = allocateReg();

            // rtmp   : = k
            scheduleInstruction(mov_ri, rtmp, (k));

            // rdest  : = rdest + rtmp
            scheduleInstruction(add_rr, rdest, rtmp);

            // rdest  : = rdest + (immediateVal - k)
            scheduleInstruction(add_ri, rdest, (immediateVal - k));
    }
}
```

⎱ 66

⎱ 68

# Fig. 7

|    | 95 |    |    |    | 97 |
|----|----|----|----|----|----|
| 1  | 15 | 42 | 00 | ab | mov  &0xab00, r5 |
| 2  | 35 | 50 | 42 | 00 | add  #0x0042,     r5 |
| 3  | 15 | 45 | 00 | ef | mov  0xef00(r5),r5 |
| 4  | 82 | 45 | 00 | ab | mov  r5,  &0xab00 |

99

# Fig. 8

```
1  39  40  10  00        mov   #0x0010, r9
2  15  42  00  ab        mov   &0xab00, r5
3  35  50  32  00        add   #0x0032, r5          110
4  05  59                add   r9, r5
5  15  45  00  ef        mov   0xef00(r5), r5
6  82  45  00  ab        mov   r5,  &0xab00
```

## Fig. 9

```
1  15  42  00  ab        mov   &0xab00,  r5
2  39  40  10  00        mov   #0x0010,  r9
3  05  59                add   r9, r5                112
4  35  50  32  00        add   #0x0032,  r5
5  15  45  00  ef        mov   0xef00(r5), r5
6  82  45  00  ab        mov   r5,  &0xab00
```

## Fig. 10

## Fig. 11A

## Fig. 11B

## Fig. 11C

## Fig. 11D

Fig. 12

Fig. 13

Fig. 14

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2343663 A1, GEMALTO
- WO 02054228 A1
- WO 0227478 A1

**Littérature non-brevet citée dans la description**

- **GIOVANNI AGOSTA et al.** A code morphing methodology to automate power analysis countermeasures. *Proceedings of the 49th Annual ACM/IEEE Design Automation Conférence (DAC'12),* Juin 2012, 77-82
- Can code polymorphism limit information leakage?. **ANTOINE AMARILLI et al.** WISTP 2011, Lecture Notes in Computer Science. Springer, 2011, vol. 6633, 1-21
- An AES Smart Card Implementation Résistant to Power Analysis Attacks. **CRISTOPH HERBST et al.** ACNS 2006, LNCS. Springer, 2006, vol. 3989, 239-252
- **HENRI-PIERRE CHARLES.** Basic infrastructure for dynamic code génération », workshop « Dynamic compilation everywhere. *7th HiPEAC conférence,* Janvier 2012
- **DAMIEN COUROUSSÉ et al.** Dynamic code génération: an experiment on matrix multiplication », Proceedings of the work-in-progress session. *LCTES 2012,* Juin 2012
- **PIERRE-HENRI CHARLES.** *DeGoal Documentation : Dynamic Execution of Generated Optimized kernel from Algorithmic Level,* 2013
- **MANGARD et al.** Power analysis attacks : revealing the secrets of smart cards. Springer-Verlag New York Inc, 2007, vol. 31
- Random Number Génération Using the MSP430. *Application Report SLAA338, Texas Instruments,* Octobre 2006
- **I. PIUMARTA et al.** *Ynvm : dynamis compilation in support of software évolution,* 2001